# EUROPEAN PATENT SPECIFICATION

(11) **EP 3 434 453 B1**
(45) Date of publication and mention of the grant of the patent: **09.09.2020**
(21) Application number: 17789206.4
(22) Date of filing: 06.04.2017
(51) Int. Cl.: B29C 65/04, B29C 70/28, B29C 65/00, B29C 65/14, B29C 65/22, B29C 65/32, B29L 31/30

(54) **METHOD FOR BONDING COMPOSITE MATERIALS TOGETHER**
VERFAHREN ZUM VERBINDEN VON VERBUNDWERKSTOFFEN
PROCÉDÉ POUR LIER ENSEMBLE DES MATÉRIAUX COMPOSITES

(30) Priority: 26.04.2016 JP 2016088199
(43) Date of publication of application: 30.01.2019
(73) Proprietor: Mitsubishi Heavy Industries, Ltd., Tokyo 108-8215 (JP)
(72) Inventor: KAMIHARA, Nobuyuki, Tokyo 108-8215 (JP); ABE, Toshio, Tokyo 108-8215 (JP)
(74) Representative: Henkel & Partner mbB
(86) International application number: PCT/JP2017/014309
(87) International publication number: WO 2017/187918

(56) References cited:
- DE-A1-102014 209 815
- JP-A- S 645 820
- JP-A- S 646 507
- JP-A- H0 327 927
- JP-A- H0 911 371
- JP-A- H10 128 860
- US-A1- 2010 124 659
- US-A1- 2014 216 635
- US-A1- 2016 059 534

## Description

### Technical Field

The present invention relates to a method for bonding composite materials, which are prepared by impregnating reinforced fibers with a thermosetting resin.

### Background Art

Composite materials prepared by impregnating reinforced fibers with a thermosetting resin are known as materials exhibiting lightness and high strength. Composite materials are used in aircraft, automobiles, marine vessels, and the like. A known method of bonding composite materials together is a method of disposing portions of two split bodies made of composite materials prepared in a semi-cured state (semi-cured parts) opposite one another, arranging a thermosetting resin on an outer surface near the junction of the semi-cured parts, and integrally heat-curing the semi-cured parts of the split bodies and the arranged thermosetting resin by applying pressure and heat (see Patent Document 1).

### Citation List

### Patent Document

Patent Document 1: JP 07-323477 A

### Summary of Invention

### Problem to be Solved by the Invention

In the method of Patent Document 1, a semi-cured part is formed on each split body, but when the formation of the semi-cured part is not executed suitably, the bond between the two split bodies becomes poor. This may make it difficult to suitably maintain the quality of the bonding strength. In addition, in the method of Patent Document 1, a thermosetting resin is arranged, which leads to a problem in that it is difficult to bond the composite materials together to form a shape for use in an aircraft, an automobile, a marine vessel, or the like.

US 2010 124 659 A1 discloses a composite structure, which is fabricated by staging at least a portion of an uncured, first composite component. The first composite component is assembled with a second composite component, and the staged portion of the first composite component is occurred with the second composite component.

US 2014 216 635 A1 discloses a method of assembling composite material parts. The method makes provision for: mounting the parts for assembly under stress on a stand, which parts have been partially polymerized; heating these parts so as to polymerize them completely, thereby enabling the stresses in the parts to be relaxed and enabling them to match the shape of the sand; cooling the parts; and assembling in conventional manner the parts as cooled in this way.

To keep the quality of the bonding strength of composite materials constant and form a shape for use in an aircraft, an automobile, a marine vessel, or the like, there is a known method of producing each composite material using an autoclave and assembling the respective composite materials that are produced in a secondary bonding step or a co-bonding step. Since an autoclave is used in this method, it is necessary to include a lamination step, a debulking step, and a bagging step, which are preparation steps in the production method for composite materials, using prepregs as composite materials. The lamination step is a step of laminating prepregs of the composite materials. The debulking step is a step of removing the air for every few of the prepregs of the composite materials. The bagging step is a step of housing the prepregs of the composite materials from which air has been removed in a bagging film and drawing a vacuum inside the bagging film. The secondary bonding step is a step of assembling each composite material by adjusting the gaps between the respective composite materials, opening fastener holes for each of the composite materials, opening holes for fastening the fasteners, and then fastening the fasteners. The co-bonding step is a step of applying an adhesive to the bonding surface of each composite material, applying pressure and heat to bond the respective composite materials together, and then fastening using additional fasteners to enhance the reliability of the bonded portion. Therefore, in this method, there are many steps, and the steps take a long time, thus there is a problem in that the method is inefficient.

The present invention was conceived in light of the problems described above, and an object thereof is to provide a method for bonding composite materials together, wherein regions to be bonded are suitably placed in a semi-cured state, and the composite materials are efficiently bonded together while the quality of the bonding strength of the composite materials is suitably maintained.

### Solution to Problem

To solve the problems described above and to achieve the object described above, the method for bonding composite materials together is a method of bonding composite materials together, wherein a first composite material and a second composite material prepared by impregnating reinforced fibers with thermosetting resins are bonded together by heating to heat-cure the first and second composite materials, and at least prescribed regions of the first and second composite materials assume a softened state, which is a state before the thermosetting resins are heat-cured, a cured state, which is a state after the thermosetting resins are heat-cured, or a semi-cured state, which is a state between the softened state and the cured state; the method including: a first curing preparation step, wherein a first bonding region of the first composite material to be bonded to the second composite material is prepared to be maintained in a softened state; a first curing step performed after the first curing preparation step, wherein a first non-bonding region, which is a region other than the first bonding region, is placed in the cured state by heating; a first semi-curing preparation step performed after the first curing step, wherein the first bonding region is placed in a heatable state; a first semi-curing step performed after the first semi-curing preparation step, wherein the first bonding region is placed in the semi-cured state by heating; a contact pressure step, wherein the first bonding region, having assumed the semi-cured state in the first semi-curing step, is pressed in contact with a second bonding region of the second composite material to be bonded with the first composite material, the second bonding material assuming the softened state or the semi-cured state; and a heat-bonding step, wherein the first and second bonding regions, having been brought into contact and pressed in the contact pressure step, are placed in the cured state by heating.

With this configuration, regions to be bonded can be suitably placed in a semi-cured state, and the composite materials can be efficiently bonded together while the quality of the bonding strength of the composite materials is suitably maintained. With this configuration, the method for bonding composite materials together does not require preparation steps such as a lamination step, a debulking step, or a bagging step, or a secondary bonding step or a co-bonding step.

In the first curing preparation step of this configuration, the first bonding region is preferably covered with an electromagnetic wave shield, and in the first curing step, an electric field or a magnetic field is preferably applied to the first non-bonding region exposed from the electromagnetic wave shield. Alternatively, in the first curing preparation step of this configuration, a metal nanocoil is preferably applied or a metal nanocoil sheet to which a metal nanocoil is applied is preferably attached to the first non-bonding region, and in the first curing step, an electric field or a magnetic field is preferably applied to the first non-bonding region to which the metal nanocoil is applied or the metal nanocoil sheet is attached. With these configurations, the region heated by an electric field or a magnetic field and the unheated region are clearly separated by the electromagnetic wave shield or the metal nanocoil and are then heated with an electric field or a magnetic field, and thereby the regions to be bonded can be more suitably placed in a semi-cured state.

In the first curing step of the configuration using an electromagnetic wave shield or a metal nanocoil in the first curing preparation step, the electric field is preferably applied in a direction along the first non-bonding region, or the magnetic field is preferably applied in a direction orthogonal to a direction along the first non-bonding region. With this configuration, heating can be performed efficiently with an electric field or a magnetic field in the first curing step.

In the first curing preparation step of the configuration using an electromagnetic wave shield or a metal nanocoil in the first curing preparation step, some or all of the reinforced fibers are preferably cut at the border between the first bonding region and the first non-bonding region. With this configuration, the current flowing through the reinforced fibers over the first bonding region and the first non-bonding region can be reduced, and thus the region heated by an electric field or a magnetic field and the unheated region can be more clearly separated. Therefore, the regions to be bonded can be more suitably placed in a semi-cured state.

In the first curing preparation step of these configurations, the first non-bonding region is preferably covered with an electromagnetic wave shield, and in the first semi-curing step, an electric field or a magnetic field is preferably applied to the first bonding region exposed from the electromagnetic wave shield. Alternatively, in the first semi-curing preparation step of these configurations, a metal nanocoil is preferably applied or a metal nanocoil sheet to which a metal nanocoil is applied is preferably attached to the first bonding region. In the first semi-curing step, an electric field or a magnetic field is preferably applied to the first bonding region to which the metal nanocoil is applied or the metal nanocoil sheet is attached. With these configurations, the region heated by an electric field or a magnetic field and the unheated region are clearly separated by the electromagnetic wave shield or the metal nanocoil and are then heated with an electric field or a magnetic field, and thus the regions to be bonded can be more suitably placed in a semi-cured state.

In the first semi-curing step of the configuration using an electromagnetic wave shield or a metal nanocoil in the first semi-curing preparation step, the electric field is preferably applied in a direction along the first bonding region, or the magnetic field is preferably applied in a direction orthogonal to a direction along the first bonding region. With this configuration, heating can be performed efficiently with an electric field or a magnetic field in the first semi-curing step.

In the first semi-curing preparation step of the configuration using an electromagnetic wave shield or a metal nanocoil in the first semi-curing preparation step, some or all of the reinforced fibers are preferably cut at the border between the first bonding region and the first non-bonding region. With this configuration, the current flowing through the reinforced fibers over the first bonding region and the first non-bonding region can be reduced, and thus the region heated by an electric field or a magnetic field and the unheated region can be more clearly separated. Therefore, the regions to be bonded can be more suitably placed in a semi-cured state.

In the contact pressure step of these configurations, the first non-bonding region and a second non-bonding region, which is a region other than the second bonding region, are preferably covered with an electromagnetic wave shield, and in the heat bonding step, an electric field or a magnetic field is preferably applied to the first and second bonding regions exposed from the electromagnetic wave shield. Alternatively, in the contact pressure step of these configurations, a metal nanocoil is preferably applied or a metal nanocoil sheet to which a metal nanocoil is applied is preferably attached to the first and second bonding regions placed in contact with each other and pressed. In the heat bonding step, an electric field or a magnetic field is preferably applied to the first and second bonding regions to which the metal nanocoil is applied or the metal nanocoil sheet is attached. With these configurations, the region heated by an electric field or a magnetic field and the unheated region are clearly separated by the electromagnetic wave shield or the metal nanocoil and are then heated with an electric field or a magnetic field. Thus, the regions to be bonded can be suitably heated.

In the heat bonding step of the configuration using an electromagnetic wave shield or a metal nanocoil in the contact pressure step, the electric field is preferably applied in a direction along the first and second bonding regions, or the magnetic field is preferably applied in a direction orthogonal to a direction along the first and second bonding regions. With this configuration, heating can be performed efficiently with an electric field or a magnetic field in the heat bonding step.

In the contact pressure step of the configuration using an electromagnetic wave shield or a metal nanocoil in the contact pressure step, some or all of the reinforced fibers are preferably cut at the border between the first bonding region and the first non-bonding region and the border between the second bonding region and the second non-bonding region, which is a region other than the second bonding region. With this configuration, the current flowing through the reinforced fibers over the first bonding region and the first non-bonding region can be reduced. Thus, the region heated by an electric field or a magnetic field and the unheated region can be more clearly separated. Therefore, the regions to be bonded can be suitably heated.

In these configurations, the method preferably includes: a second curing preparation step, wherein the second bonding region is prepared to be maintained in the softened state; and a second curing step performed after the second curing preparation step, wherein the second non-bonding region, which is a region other than the second bonding region, is placed in the cured state by heating, wherein both steps precede the contact pressure step. With this configuration, the second non-bonding region can be stabilized.

In the second curing preparation step of a configuration including a second curing preparation step and a second curing step, the second bonding region is preferably covered with an electromagnetic wave shield, and in the second curing step, an electric field or a magnetic field is preferably applied to the second non-bonding region exposed from the electromagnetic wave shield. Alternatively, in the second curing preparation step of a configuration including a second curing preparation step and a second curing step, a metal nanocoil or a metal nanocoil sheet to which a metal nanocoil is applied is preferably attached to the second non-bonding region. In the second curing step, an electric field or a magnetic field is preferably applied to the second non-bonding region to which the metal nanocoil is applied or the metal nanocoil sheet is attached. With these configurations, the region heated by an electric field or a magnetic field and the unheated region are clearly separated by the electromagnetic wave shield or the metal nanocoil and are then heated with an electric field or a magnetic field. Thus, the second non-bonding region can be suitably stabilized.

In the second curing step of the configuration using an electromagnetic wave shield or a metal nanocoil in the second curing preparation step, the electric field is preferably applied in a direction along the second non-bonding region, or the magnetic field is preferably applied in a direction orthogonal to a direction along the second non-bonding region. With this configuration, heating can be performed efficiently with an electric field or a magnetic field in the second curing step.

In the second curing preparation step of the configuration using an electromagnetic wave shield or a metal nanocoil in the second curing preparation step, some or all of the reinforced fibers are preferably cut at the border between the second bonding region and the second non-bonding region. With this configuration, the current flowing through the reinforced fibers over the second bonding region and the second non-bonding region can be reduced, and thus the region heated by an electric field or a magnetic field and the unheated region can be more clearly separated. Therefore, the second non-bonding region can be more suitably stabilized.

In a configuration including a second curing preparation step and a second curing step, the method preferably includes: a second semi-curing preparation step performed after the second curing step, wherein the second bonding region is placed in a heatable state; and a second semi-curing step performed after the second curing preparation step, wherein the second bonding region is placed in the semi-cured state by heating, wherein both steps precede the contact pressure step. With this configuration, the regions to be bonded can be more suitably placed in a semi-cured state.

In the second semi-curing preparation step of a configuration including a second semi-curing preparation step and a second semi-curing step, the second bonding region is preferably covered with an electromagnetic wave shield. In the second semi-curing step, an electric field or a magnetic field is preferably applied to the second bonding region exposed from the electromagnetic wave shield. Alternatively, in the second semi-curing preparation step of a configuration including a second semi-curing preparation step and a second semi-curing step, a metal nanocoil or a metal nanocoil sheet to which a metal nanocoil is applied is preferably attached to the second bonding region. In the second semi-curing step, an electric field or a magnetic field is preferably applied to the second bonding region to which the metal nanocoil is applied or the metal nanocoil sheet is attached. With these configurations, the region heated by an electric field or a magnetic field and the unheated region are clearly separated by the electromagnetic wave shield or the metal nanocoil and are then heated with an electric field or a magnetic field. Thus, the regions to be bonded can be more suitably placed in a semi-cured state.

In the second semi-curing step of the configuration using an electromagnetic wave shield or a metal nanocoil in the second semi-curing preparation step, the electric field is preferably applied in a direction along the second bonding region, or the magnetic field is preferably applied in a direction orthogonal to a direction along the second bonding region. With this configuration, heating can be performed efficiently with an electric field or a magnetic field in the second semi-curing step.

In the second semi-curing preparation step of the configuration using an electromagnetic wave shield or a metal nanocoil in the second semi-curing preparation step, some or all of the reinforced fibers are preferably cut at the border between the second bonding region and the second non-bonding region. With this configuration, the current flowing through the reinforced fibers over the second bonding region and the second non-bonding region can be reduced. Thus, the region heated by an electric field or a magnetic field and the unheated region can be more clearly separated. Therefore, the regions to be bonded can be more suitably placed in a semi-cured state.

### Advantageous Effect of Invention

With this configuration, it is possible to provide a method for bonding composite materials together, wherein regions to be bonded are suitably placed in a semi-cured state, and the composite materials are efficiently bonded together while the quality of the bonding strength of the composite materials is suitably maintained.

### Brief Description of Drawings

FIG. 1 is a schematic configuration diagram of a bonded material produced by the bonding methods of first to fifth embodiments of the present invention.
FIG. 2 is a drawing for explaining the curing temperature range and the semi-curing temperature range of a thermosetting resin contained in the composite material.
FIG. 3 is a schematic configuration diagram illustrating an example of a first electromagnetic wave heating device used in the bonding method of the first embodiment of the present invention.
FIG. 4 is a drawing illustrating a first composite material subjected to prescribed treatment in the bonding method of the first embodiment of the present invention.
FIG. 5 is a schematic configuration diagram illustrating an example of a second electromagnetic wave heating device used in the bonding method of the first embodiment of the present invention.
FIG. 6 is a schematic configuration diagram illustrating an example of a third electromagnetic wave heating device used in the bonding method of the first embodiment of the present invention.
FIG. 7 is a drawing illustrating a second composite material subjected to prescribed treatment in the bonding method of the first embodiment of the present invention.
FIG. 8 is a schematic configuration diagram illustrating an example of a fourth electromagnetic wave heating device used in the bonding method of the first embodiment of the present invention.
FIG. 9 is a schematic configuration diagram illustrating an example of a fifth electromagnetic wave heating device used in the bonding method of the first embodiment of the present invention.
FIG. 10 is a flowchart of the bonding method of the first embodiment of the present invention.
FIG. 11 is a schematic configuration diagram illustrating an example of a fifth electromagnetic wave heating device used in the bonding method of the second embodiment of the present invention.
FIG. 12 is a schematic configuration diagram illustrating an example of a first electric field heating device used in the bonding method of the third embodiment of the present invention.
FIG. 13 is a schematic configuration diagram illustrating an example of a second electric field heating device used in the bonding method of the third embodiment of the present invention.
FIG. 14 is a schematic configuration diagram illustrating an example of a third electric field heating device used in the bonding method of the third embodiment of the present invention.
FIG. 15 is a schematic configuration diagram illustrating an example of a fourth electric field heating device used in the bonding method of the third embodiment of the present invention.
FIG. 16 is a schematic configuration diagram illustrating an example of a fifth electric field heating device used in the bonding method of the third embodiment of the present invention.
FIG. 17 is a schematic configuration diagram illustrating an example of a first magnetic field heating device used in the bonding method of the fourth embodiment of the present invention.
FIG. 18 is a schematic configuration diagram illustrating an example of a second magnetic field heating device used in the bonding method of the fourth embodiment of the present invention.
FIG. 19 is a schematic configuration diagram illustrating an example of a third magnetic field heating device used in the bonding method of the fourth embodiment of the present invention.
FIG. 20 is a schematic configuration diagram illustrating an example of a fourth magnetic field heating device used in the bonding method of the fourth embodiment of the present invention.
FIG. 21 is a schematic configuration diagram illustrating an example of a fifth magnetic field heating device used in the bonding method of the fourth embodiment of the present invention.
FIG. 22 is a schematic configuration diagram illustrating an example of a first magnetic field heating device used in the bonding method of the fifth embodiment of the present invention.
FIG. 23 is a schematic configuration diagram illustrating an example of a second magnetic field heating device used in the bonding method of the fifth embodiment of the present invention.
FIG. 24 is a schematic configuration diagram illustrating an example of a third magnetic field heating device used in the bonding method of the fifth embodiment of the present invention.
FIG. 25 is a schematic configuration diagram illustrating an example of a fourth magnetic field heating device used in the bonding method of the fifth embodiment of the present invention.
FIG. 26 is a schematic configuration diagram illustrating an example of a fifth magnetic field heating device used in the bonding method of the fifth embodiment of the present invention.

### Description of Embodiments

Detailed descriptions will be given below of embodiments according to the present invention on the basis of the drawings. Note that the present invention is not limited by these embodiments. In addition, the constituent elements in the embodiments include those that can be easily replaced by a person skilled in the art or those that are substantially the same. The various constituent elements described hereafter may also be combined, as appropriate.

### First Embodiment

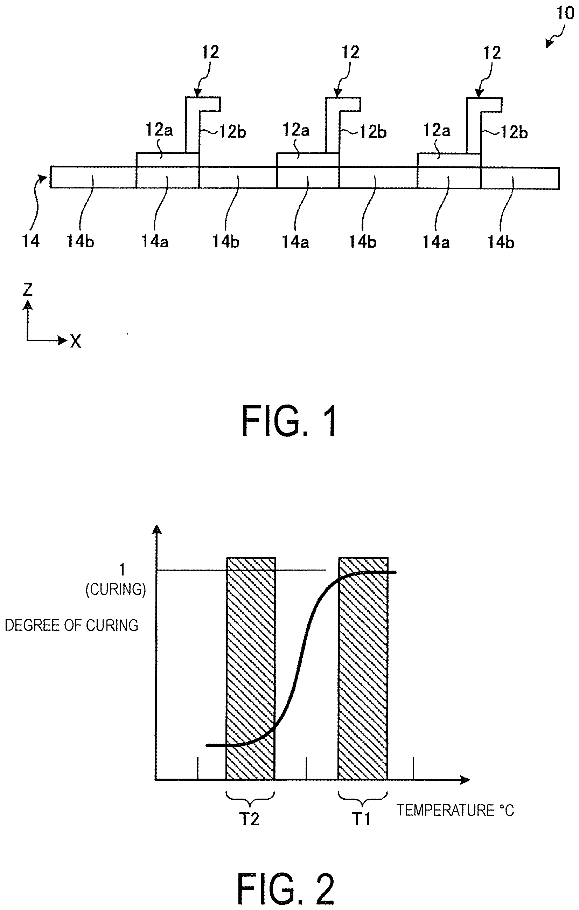

FIG. 1 is a schematic configuration diagram of a bonded material 10 produced by the bonding methods of first to fifth embodiments of the present invention. As illustrated in FIG. 1, a bonding material 10 contains a first composite material 12 and a second composite material 14. The first composite material 12 is prepared by impregnating reinforced fibers with a thermosetting resin. The second composite material 14 is prepared by impregnating reinforced fibers with a thermosetting resin. Carbon fibers are an example of the respective reinforced fibers of the first composite material 12 and the reinforced fibers of the second composite material 14. The reinforced fibers of the first composite material 12 and the reinforced fibers of the second composite material 14 are not limited to this example and may also be other metal fibers. Epoxy resins are an example of the respective thermosetting resin of the first composite material 12 and the thermosetting resin of the second composite material 14. The thermosetting resin of the first composite material 12 and the thermosetting resin of the second composite material 14 are not limited to this example and may also be other thermosetting resins.

The first composite material 12 includes a first bonding region 12a to be bonded with the second composite material 14 and a first non-bonding region 12b, which is a region other than the first bonding region 12a. The first non-bonding region 12b is a region that is not bonded with the second composite material 14. The second composite material 14 includes a second bonding region 14a to be bonded with the first composite material 12 and a second non-bonding region 14b, which is a region other than the second bonding region 14a. The second non-bonding region 14b is a region that is not bonded with the first composite material 12. The first bonding region 12a of the first composite material 12 and the second bonding region 14a of the second composite material 14 are bonded together in the Z-direction in FIG. 1, which is the vertical direction, to form a bonded material 10.

Before forming the bonded material 10, at least prescribed regions of the first composite material 12 and the second composite material 14 can assume a softened state, a cured state, and a semi-cured state. The softened state is a state before the thermosetting resin is heat-cured. The softened state is a state that is not self-supporting, and is a state in which the shape cannot be maintained when not supported on a support. The softened state is a state in which the thermosetting resin can undergo a heat curing reaction when heated. The cured state is a state after the thermosetting resin is heat-cured. The cured state is a state that is self-supporting, and is a state in which the shape can be maintained even when not supported on a support. The cured state is a state in which the thermosetting resin cannot undergo a heat curing reaction even when heated. The semi-cured state is a state between the softened state and the cured state. The semi-cured state is a state in which the thermosetting resin is subjected to heat curing to a weaker degree than in the cured state. The semi-cured state is a state that is self-supporting, and is a state in which the shape can be maintained even when not supported on a support. The semi-cured state is a state in which the thermosetting resin can undergo a heat curing reaction when heated. In the bonded material 10, the first composite material 12 and the second composite material 14 are in the cured state in all of the regions.

In the bonded material 10, the first composite material 12 has a more complex shape than the second composite material 14. Specifically, the first bonding region 12a of the first composite material 12 extends along the horizontal plane including the X-direction in FIG. 1. The first non-bonding region 12b of the first composite material 12 has a complex shape including a region extending along the vertical plane including the Z-direction in FIG. 1, with one end of the first bonding region 12a as the base end thereof. The second composite material 14 has a simpler shape than the first composite material 12. The second composite material 14 has a plate shape extending along the horizontal direction including the X-direction in FIG. 1, and the second non-bonding region 14a and the second bonding region 14a are provided alternately from one end to the other end thereof. The first bonding region 12a of the first composite material 12 faces the second bonding region 14a of the second composite material 14 in a direction along the Z-direction in FIG. 1. The shape and area of the first bonding region 12a of the first composite material 12 in a direction along the horizontal plane including the X-direction in FIG. 1 are approximately the same as those of the second bonding region 14a of the second bonding region 14. The first bonding region 12a of the first composite material 12 is not limited to this case, and the area in a direction along the horizontal plane including the X-direction in FIG. 1 may also be smaller than that of the second bonding region 14a of the second composite material 14. Hereinafter, the X-direction illustrated in other drawings is the same as the X-direction in FIG. 1. In addition, hereinafter, the Z-direction illustrated in other drawings is the same as the Z-direction in FIG. 1.

FIG. 2 is a drawing for explaining the curing temperature range and the semi-curing temperature range of a thermosetting resin contained in the composite material. FIG. 2 is a graph showing the relationship between the heating temperature of the thermosetting resin and the degree of curing of the thermosetting resin. In the graph shown in FIG. 2, the horizontal axis is the temperature, and the vertical axis is the degree of curing. The units of the temperature represented by the horizontal axis in the graph illustrated in FIG. 2 are °C. The degree of curing represented by the graph shown in FIG. 2 is the ratio to which the thermosetting resin undergoes a heat curing reaction. The curing temperature range T1 is the range of the heating temperature in which the degree of curing of the thermosetting resin is substantially 1. That is, the curing temperature range T1 is the range of the heating temperature of the thermosetting resin for which the thermosetting resin assumes the cured state. The heat curing reaction of the thermosetting resin progresses rapidly at temperatures included in the curing temperature range T1. The curing temperature range T1 differs depending on the thermosetting resin contained in the composite material but may be, for example, a temperature range of not lower than 150°C for the epoxy resins used in the first composite material 12 and the second composite material 14. The semi-curing temperature range T2 is the range of the heating temperature in which the heat curing reaction of the thermosetting resin occurs but the degree of curing of the thermosetting resin is maintained at a low level. That is, the semi-curing temperature range T2 is the range of the heating temperature of the thermosetting resin for which the thermosetting resin assumes the semi-cured state. The semi-curing temperature range T2 differs depending on the thermosetting resin contained in the composite material but may be, for example, a temperature range of not lower than 100°C and not higher than 140°C for the epoxy resins used in the first composite material 12 and the second composite material 14.

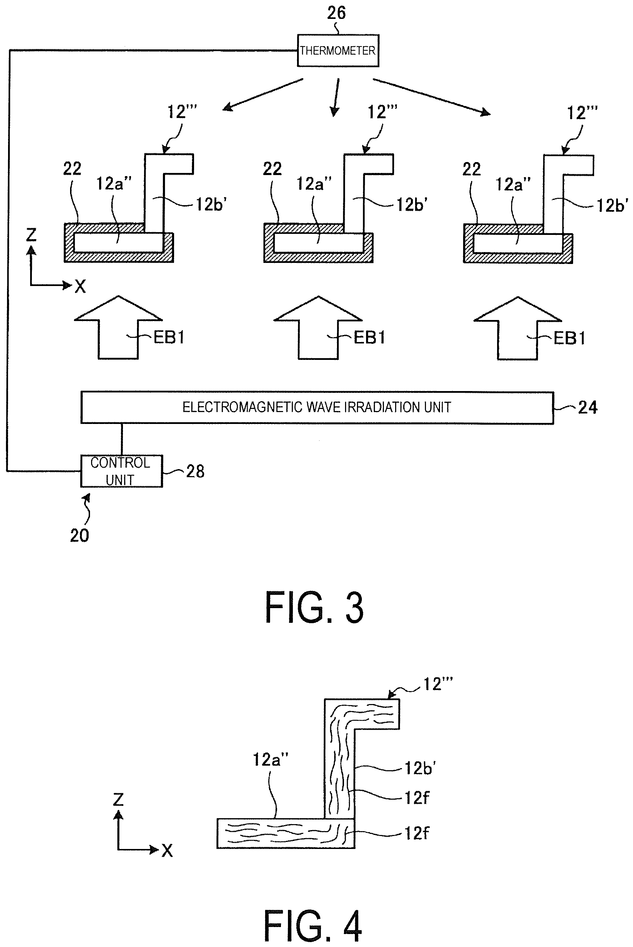

FIG. 3 is a schematic configuration diagram illustrating an example of a first electromagnetic wave heating device 20 used in the bonding method of the first embodiment of the present invention. The first electromagnetic wave heating device 20 places a first composite material 12"', which is prepared so that a first bonding region 12a" is maintained in the softened state, in the cured state by heating a first non-bonding region 12b'. Here, the first composite material 12'" represents a first composite material in which the thermosetting resin is in the softened state in all of the regions thereof. The first bonding region 12a" represents a first bonding region in which the thermosetting resin is in the softened state. The first non-bonding region 12b' represents a first non-bonding region in which the thermosetting resin is in the softened state. The first non-bonding region 12b' becomes the first non-bonding region 12b as a result of assuming the cured state when heated. As a result of the first non-bonding region 12b' becoming the first non-bonding region 12b, the first composite material 12'" becomes the first composite material 12".

The first electromagnetic wave heating device 20 irradiates the first composite material 12"', the first bonding region 12a" of which is covered by a first electromagnetic wave shield 22, with a first electromagnetic wave EB1 so as to place the first non-bonding region 12b' exposed from the first electromagnetic wave shield 22 in the cured state by heating with the first electromagnetic wave EB1. The first electromagnetic wave shield 22 may be an aluminum foil or an aluminum plate, for example, but is not limited to these examples. In this case, the first electromagnetic wave heating device 20 irradiates the first composite material 12'" with the first electromagnetic wave EB1 after the first electromagnetic wave shield 22 clearly separates the first composite material 12"'into the first non-bonding region 12b' as a region heated by the first electromagnetic wave EB1 and the first bonding region 12a" as a region not heated by the first electromagnetic wave EB1. Therefore, the first bonding region 12a" can be suitably maintained in the softened state, and thus the first bonding region 12a" can be suitably placed in the semi-cured state in a subsequent process.

As illustrated in FIG. 3, the first electromagnetic wave heating device 20 includes an electromagnetic wave irradiation unit 24, a thermometer 26, and a control unit 28. The electromagnetic wave irradiation unit 24 emits the first electromagnetic wave EB1 based on the control of the control unit 28. The electromagnetic wave irradiation unit 24 preferably emits a first electromagnetic wave EB1 including an electric field component along the vertical plane including the Z-direction in which the first non-bonding region 12b' extends. When the electromagnetic wave irradiation unit 24 emits a first electromagnetic wave EB1 including an electric field component along the vertical plane including the Z-direction in which the first non-bonding region 12b' extends, the first non-bonding region 12b' can be heated efficiently by the first electromagnetic wave EB1. The electromagnetic wave irradiation unit 24 preferably emits a first electromagnetic wave EB1 including a magnetic field component along the X-direction orthogonal to the vertical plane including the Z-direction in which the first non-bonding region 12b' extends. When the electromagnetic wave irradiation unit 24 emits a first electromagnetic wave EB1 including a magnetic field component along the X-direction orthogonal to the vertical plane including the Z-direction in which the first non-bonding region 12b' extends, the first non-bonding region 12b' can be heated efficiently by the first electromagnetic wave EB1. The electromagnetic wave irradiation unit 24 may be, for example, a microwave irradiation device which emits microwaves, but is not limited to this example, and a known electromagnetic wave irradiation unit may be suitably used.

The thermometer 26 detects the temperature of a region that is heated by irradiation with the first electromagnetic wave EB1 based on the control of the control unit 28. That is, the thermometer 26 measures the temperature of the first non-bonding region 12b'. The thermometer 26 transmits the temperature information that is measured and acquired to the control unit 28. The thermometer 26 may be, for example, a thermoviewer which is a non-contact type thermometer that detects the temperature with infrared rays, but is not limited to this example. Although a non-contact type thermometer is illustrated in FIG. 3, the thermometer 26 may also be a contact-type thermometer, an example of which is an optical fiber thermometer.

The control unit 28 includes a storage unit and a processing unit. The storage unit includes a storage device such as a RAM, ROM, or flash memory, for example, and stores a software program to be processed by the processing part and data or the like to be referenced by the software program. In addition, the storage unit also functions as a storage region in which the processing unit temporarily stores processing results or the like. The processing unit fulfills a function in accordance with the content of the software program by reading out and processing the software program or the like from the storage unit. The control unit 28 controls the electromagnetic wave irradiation unit 24 and the thermometer 26.

The control unit 28 controls the first electromagnetic wave EB1 emitted by the electromagnetic wave irradiation unit 24 based on the temperature information obtained from the thermometer 26. Therefore, the control unit 28 can perform heat curing treatment by heating the first non-bonding region 12b' at a constant temperature within the curing temperature range T1.

FIG. 4 is a drawing illustrating a first composite material 12'" subjected to prescribed treatment in the bonding method of the first embodiment of the present invention. As illustrated in FIG. 4, a first composite material 12'" contains first carbon fibers 12f. The first carbon fibers 12f of the first composite material 12"' respond to the electric field and the magnetic field included in the emitted electromagnetic wave, whereby an electric current is generated therein, and heat is generated by the electrical resistance of the first carbon fibers 12f themselves. The first composite material 12'" is heated together with the heat generation of the first carbon fibers 12f. Some or all of the first carbon fibers 12f of the first composite material 12'" are preferably cut off at the border between the first bonding region 12a'" and the first non-bonding region 12b' before electromagnetic wave heat treatment is performed by the first electromagnetic wave heating device 20. When the first carbon fibers 12f are cut off, the current flowing through the first carbon fibers 12f is reduced across the first bonding region 12a" and the first non-bonding region 12b'. Therefore, the first composite material 12'", can be clearly separated into the first non-bonding region 12b' as a region heated by the first electromagnetic wave EB1, and the first bonding region 12a" as a region not heated by the first electromagnetic wave EB1. As a result, the first bonding region 12a" can be suitably maintained in the softened state, and thus the first bonding region 12a" can be suitably placed in the semi-cured state in a subsequent process.

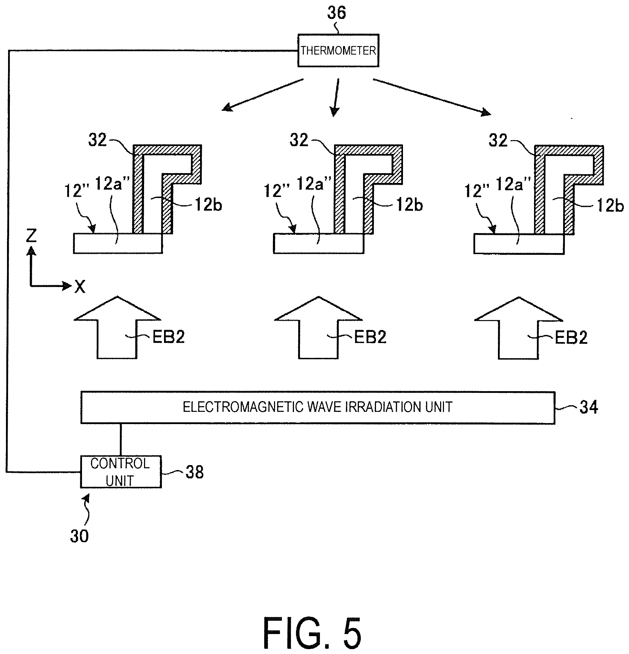

FIG. 5 is a schematic configuration diagram illustrating an example of a second electromagnetic wave heating device 30 used in the bonding method of the first embodiment of the present invention. The second electromagnetic wave heating device 30 places a first composite material 12", which is prepared so that a first bonding region 12a" is in a heatable state after a first non-bonding region 12b' assumes the cured state and becomes a first non-bonding region 12b, in the semi-cured state by heating the first bonding region 12a". Here, the first composite material 12'" represents a first composite material in which the thermosetting resin is in the softened state in the first bonding region 12a" and the thermosetting resin is in the cured state in the first non-bonding region 12b. The first non-bonding region 12b represents a first non-bonding region in which the thermosetting resin is in the cured state. The first bonding region 12a" becomes the first bonding region 12a' as a result of assuming the semi-cured state when heated. As a result of the first bonding region 12a" becoming the first bonding region 12a', the first composite material 12" becomes the first composite material 12'.

The second electromagnetic wave heating device 30 irradiates the first composite material 12", the first non-bonding region 12b of which is covered by a second electromagnetic wave shield 32, with a second electromagnetic wave EB2 so as to place the first bonding region 12a" exposed from the second electromagnetic wave shield 32 in the semi-cured state by heating with the second electromagnetic wave EB2. The second electromagnetic wave shield 32 may be an aluminum foil or an aluminum plate, for example, but is not limited to these examples. In this case, the second electromagnetic wave heating device 30 irradiates the first composite material 12" with the second electromagnetic wave EB2 after the second electromagnetic wave shield 32 clearly separates the first composite material 12"into the first bonding region 12a" as a region heated by the second electromagnetic wave EB2 and the first non-bonding region 12b as a region not heated by the second electromagnetic wave EB2. Therefore, the first bonding region 12a" can be suitably placed in a semi-cured state. In addition, it is possible to suppress the imposition of an unnecessary thermal history on the first non-bonding region 12b.

As illustrated in FIG. 5, the second electromagnetic wave heating device 30 includes an electromagnetic wave irradiation unit 34, a thermometer 36, and a control unit 38. The electromagnetic wave irradiation unit 34 emits the second electromagnetic wave EB2 based on the control of the control unit 38. The electromagnetic wave irradiation unit 34 preferably emits a second electromagnetic wave EB2 including an electric field component along the horizontal plane including the X-direction in which the first bonding region 12a" extends. When the electromagnetic wave irradiation unit 34 emits a second electromagnetic wave EB2 including an electric field component along the horizontal plane including the X-direction in which the first bonding region 12a" extends, the first bonding region 12a" can be heated efficiently by the second electromagnetic wave EB2. The electromagnetic wave irradiation unit 34 preferably emits a second electromagnetic wave EB2 including a magnetic field component along the Z-direction orthogonal to the horizontal plane including the X-direction in which the first bonding region 12a" extends. When the electromagnetic wave irradiation unit 34 emits a second electromagnetic wave EB2 including a magnetic field component along the Z-direction orthogonal to the horizontal plane including the X-direction in which the first bonding region 12a" extends, the first bonding region 12a" can be heated efficiently by the second electromagnetic wave EB2. The electromagnetic wave irradiation unit 34 may be, for example, a microwave irradiation device which emits microwaves, but is not limited to this example, and a known electromagnetic wave irradiation unit may be suitably used.

The thermometer 36 detects the temperature of a region that is heated by irradiation with the second electromagnetic wave EB2 based on the control of the control unit 38. That is, the thermometer 36 measures the temperature of the first bonding region 12a". The thermometer 36 transmits the temperature information that is measured and acquired to the control unit 38. The thermometer 36 may be, for example, a thermoviewer which is a non-contact type thermometer which detects the temperature with infrared rays, but is not limited to this example. Although a non-contact type thermometer is illustrated in FIG. 5, the thermometer 36 may also be a contact-type thermometer, an example of which is an optical fiber thermometer.

The control unit 38 includes a storage unit and a processing unit. The storage unit includes a storage device such as a RAM, ROM, or flash memory, for example, and stores a software program to be processed by the processing part and data or the like to be referenced by the software program. In addition, the storage unit also functions as a storage region in which the processing unit temporarily stores processing results or the like. The processing unit fulfills a function in accordance with the content of the software program by reading out and processing the software program or the like from the storage unit. The control unit 38 controls the electromagnetic wave irradiation unit 34 and the thermometer 36.

The control unit 38 controls the second electromagnetic wave EB2 emitted by the electromagnetic wave irradiation unit 34 based on the temperature information obtained from the thermometer 36. Therefore, the control unit 38 can perform heat curing treatment by heating the first bonding region 12a" at a constant temperature within the semi-curing temperature range T2.

The first composite material 12" contains first carbon fibers 12f, as in the case of the first composite material 12"'. As in the case of the first carbon fibers 12f of the first composite material 12'" before electromagnetic wave heat treatment is performed by the first electromagnetic wave heating device 20, some or all of the first carbon fibers 12f of the first composite material 12" are preferably cut off at the border between the first bonding region 12a" and the first non-bonding region 12b before electromagnetic wave heat treatment is performed by the second electromagnetic wave heating device 30. When the first carbon fibers 12f are cut off, the current flowing through the first carbon fibers 12f is reduced across the first bonding region 12a" and the first non-bonding region 12b. Therefore, in the first composite material 12", the first bonding region 12a" can be clearly separated into a region heated by the second electromagnetic wave EB2, and the first non-bonding region 12b can be clearly separated into a region not heated by the second electromagnetic wave EB2. As a result, the first bonding region 12a" can be suitably placed in a semi-cured state. In addition, it is possible to suppress the imposition of an unnecessary thermal history on the first non-bonding region 12b.

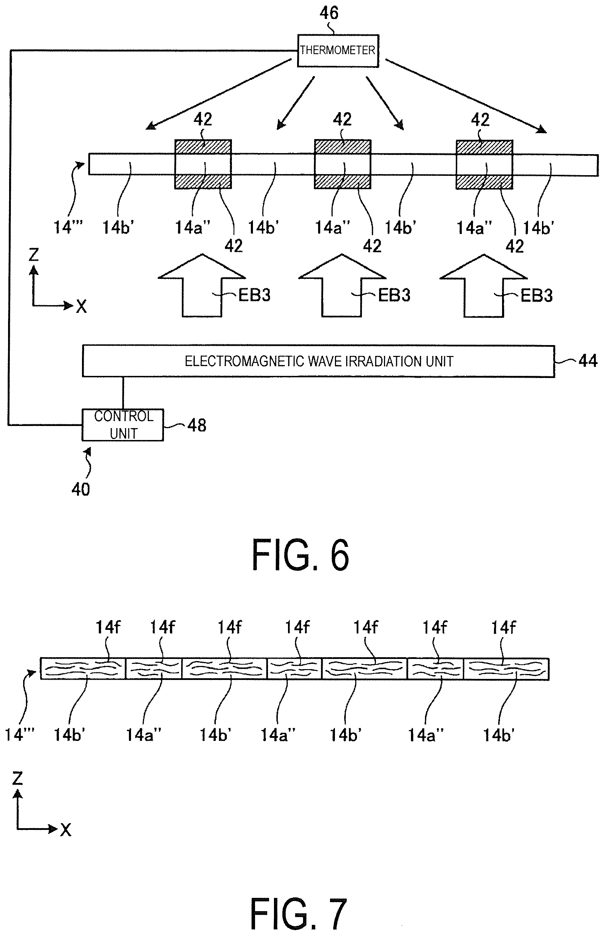

FIG. 6 is a schematic configuration diagram illustrating an example of a third electromagnetic wave heating device 40 used in the bonding method of the first embodiment of the present invention. The third electromagnetic wave heating device 40 places a second composite material 14"', which is prepared so that a second bonding region 14a" is maintained in the softened state, in the cured state by heating a second non-bonding region 14b'. Here, the second composite material 14'" represents a second composite material in which the thermosetting resin is in the softened state in all of the regions thereof. The second bonding region 14a" represents a second bonding region in which the thermosetting resin is in the softened state. The second non-bonding region 14b' represents a second non-bonding region in which the thermosetting resin is in the softened state. The second non-bonding region 14b' becomes the second non-bonding region 14b as a result of assuming the cured state when heated. As a result of the second non-bonding region 14b' becoming the second non-bonding region 14b, the second composite material 14'" becomes the second composite material 14".

The third electromagnetic wave heating device 40 irradiates the second composite material 14'", the second bonding region 14a" of which is covered by a third electromagnetic wave shield 42, with a third electromagnetic wave EB3 so as to place the second non-bonding region 14b' exposed from the third electromagnetic wave shield 42 in the cured state by heating with the third electromagnetic wave EB3. The third electromagnetic wave shield 42 may be an aluminum foil or an aluminum plate, for example, but is not limited to these examples. In this case, the third electromagnetic wave heating device 40 irradiates the second composite material 14'" with the third electromagnetic wave EB3 after the third electromagnetic wave shield 42 clearly separates the second non-bonding region 14b' into a region heated by the third electromagnetic wave EB3 and the second bonding region 14a" into a region not heated by the third electromagnetic wave EB3. Therefore, the second bonding region 14a" can be suitably maintained in the softened state, and thus the second bonding region 14a" can be suitably placed in the semi-cured state in a subsequent process. The third electromagnetic wave shield 42 may be patterned with a material that is transparent with respect to electromagnetic waves and formed into a sheet. In this case, the processing for covering the second bonding region 14a" with the third electromagnetic wave shield 42 is simplified, and the precision of the covering position is enhanced, which is preferable.

As illustrated in FIG. 6, the third electromagnetic wave heating device 40 includes an electromagnetic wave irradiation unit 44, a thermometer 46, and a control unit 48. The electromagnetic wave irradiation unit 44 emits the third electromagnetic wave EB3 based on the control of the control unit 48. The electromagnetic wave irradiation unit 44 preferably emits a third electromagnetic wave EB3 including an electric field component along the horizontal plane including the X-direction in which the second non-bonding region 14b' extends. When the electromagnetic wave irradiation unit 44 emits a third electromagnetic wave EB3 including an electric field component along the horizontal plane including the X-direction in which the second non-bonding region 14b' extends, the second non-bonding region 14b' can be heated efficiently by the third electromagnetic wave EB3. The electromagnetic wave irradiation unit 44 preferably emits a third electromagnetic wave EB3 including a magnetic field component along the Z-direction orthogonal to the horizontal plane including the X-direction in which the second non-bonding region 14b' extends. When the electromagnetic wave irradiation unit 44 emits a third electromagnetic wave EB3 including a magnetic field component along Z-direction orthogonal to the horizontal plane including the X-direction in which the second non-bonding region 14b' extends, the second non-bonding region 14b' can be heated efficiently by the third electromagnetic wave EB3. The electromagnetic wave irradiation unit 44 may be, for example, a microwave irradiation device which emits microwaves, but is not limited to this example, and a known electromagnetic wave irradiation unit may be suitably used.

The thermometer 46 detects the temperature of a region that is heated by irradiation with the third electromagnetic wave EB3 based on the control of the control unit 48. That is, the thermometer 46 measures the temperature of the second non-bonding region 14b'. The thermometer 46 transmits the temperature information that is measured and acquired to the control unit 48. The thermometer 46 may be, for example, a thermoviewer which is a non-contact type thermometer which detects the temperature with infrared rays, but is not limited to this example. Although a non-contact type thermometer is illustrated in FIG. 6, the thermometer 46 may also be a contact-type thermometer, an example of which is an optical fiber thermometer.

The control unit 48 includes a storage unit and a processing unit. The storage unit includes a storage device such as a RAM, ROM, or flash memory, for example, and stores a software program to be processed by the processing part and data or the like to be referenced by the software program. In addition, the storage unit also functions as a storage region in which the processing unit temporarily stores processing results or the like. The processing unit fulfills a function in accordance with the content of the software program by reading out and processing the software program or the like from the storage unit. The control unit 48 controls the electromagnetic wave irradiation unit 44 and the thermometer 46.

The control unit 48 controls the third electromagnetic wave EB3 emitted by the electromagnetic wave irradiation unit 44 based on the temperature information obtained from the thermometer 46. Therefore, the control unit 48 can perform heat curing treatment by heating the second non-bonding region 14b' at a constant temperature within the curing temperature range T1.

FIG. 7 is a drawing illustrating a second composite material 14"' subjected to prescribed treatment in the bonding method of the first embodiment of the present invention. As illustrated in FIG. 7, a second composite material 14'" contains second carbon fibers 14f. The second carbon fibers 14f of the second composite material 14'" respond to the electric field and the magnetic field included in the emitted electromagnetic wave, whereby an electric current is generated therein, and heat is generated by the electrical resistance of the second carbon fibers 14f themselves. The second composite material 14'" is heated together with the heat generation of the second carbon fibers 14f. Some or all of the second carbon fibers 14f of the second composite material 14'" are preferably cut off at the border between the second bonding region 14a" and the second non-bonding region 14b' before electromagnetic wave heat treatment is performed by the third electromagnetic wave heating device 40. When the second carbon fibers 14f are cut off, the current flowing through the second carbon fibers 14f is reduced across the second bonding region 14a" and the second non-bonding region 14b'. Therefore, in the second composite material 14'", the second non-bonding region 14b' can be clearly separated into a region heated by the third electromagnetic wave EB3, and the second bonding region 14a" can be clearly separated into a region not heated by the third electromagnetic wave EB3. As a result, the second bonding region 14a" can be suitably maintained in the softened state, and thus the second bonding region 14a" can be suitably placed in the semi-cured state in a subsequent process.

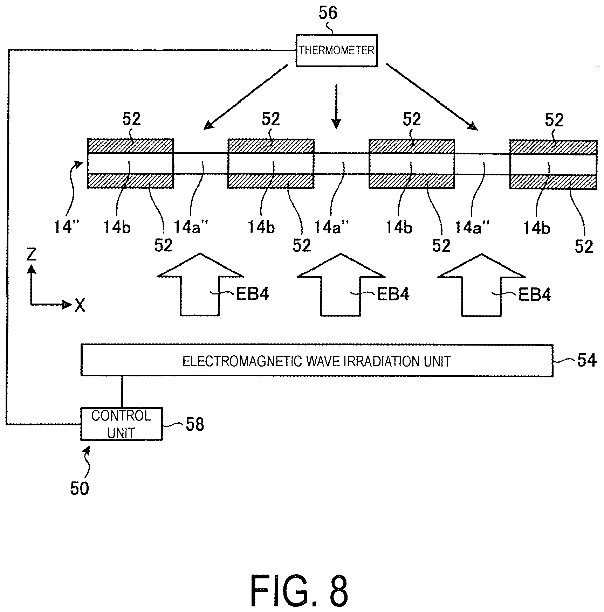

FIG. 8 is a schematic configuration diagram illustrating an example of a fourth electromagnetic wave heating device 50 used in the bonding method of the first embodiment of the present invention. The fourth electromagnetic wave heating device 50 places a second composite material 14", which is prepared so that a second bonding region 14a" is in a heatable state after a second non-bonding region 14b' assumes the cured state and becomes a second non-bonding region 14b, in the semi-cured state by heating the second bonding region 14a". Here, the second composite material 14" represents a second composite material in which the thermosetting resin is in the softened state in the second bonding region 14a" and the thermosetting resin is in the cured state in the second non-bonding region 14b. The second non-bonding region 14b represents a second non-bonding region in which the thermosetting resin is in the cured state. The second non-bonding region 14a" becomes the second non-bonding region 14a' as a result of assuming the semi-cured state when heated. As a result of the second non-bonding region 14a" becoming the second non-bonding region 14a', the second composite material 14" becomes the second composite material 14'.

The fourth electromagnetic wave heating device 50 irradiates the second composite material 14", the second non-bonding region 14b of which is covered by a fourth electromagnetic wave shield 52, with a fourth electromagnetic wave EB4 so as to place the second bonding region 14a" exposed from the fourth electromagnetic wave shield 52 in the cured state by heating with the fourth electromagnetic wave EB4. The fourth electromagnetic wave shield 52 may be an aluminum foil or an aluminum plate, for example, but is not limited to these examples. In this case, the fourth electromagnetic wave heating device 50 irradiates the second composite material 14" with the fourth electromagnetic wave EB4 after the fourth electromagnetic wave shield 52 clearly separates the second bonding region 14a" into a region heated by the fourth electromagnetic wave EB4 and the second non-bonding region 14b into a region not heated by the fourth electromagnetic wave EB4. Therefore, the second bonding region 14a" can be suitably placed in a semi-cured state. In addition, it is possible to suppress the imposition of an unnecessary thermal history on the second non-bonding region 14b. The fourth electromagnetic wave shield 52 may be patterned with a material that is transparent with respect to electromagnetic waves and formed into a sheet. In this case, the processing for covering the second non-bonding region 14b with the fourth electromagnetic wave shield 52 is simplified, and the precision of the covering position is enhanced, which is preferable.

As illustrated in FIG. 8, the fourth electromagnetic wave heating device 50 includes an electromagnetic wave irradiation unit 54, a thermometer 56, and a control unit 58. The electromagnetic wave irradiation unit 54 emits the fourth electromagnetic wave EB4 based on the control of the control unit 58. The electromagnetic wave irradiation unit 54 preferably emits a fourth electromagnetic wave EB4 including an electric field component along the horizontal plane including the X-direction in which the second bonding region 14a" extends. When the electromagnetic wave irradiation unit 54 emits a fourth electromagnetic wave EB4 including an electric field component along the horizontal plane including the X-direction in which the second bonding region 14a" extends, the second bonding region 14a" can be heated efficiently by the fourth electromagnetic wave EB4. The electromagnetic wave irradiation unit 54 preferably emits a fourth electromagnetic wave EB4 including a magnetic field component along the Z-direction orthogonal to the horizontal plane including the X-direction in which the second bonding region 14a" extends. When the electromagnetic wave irradiation unit 54 emits a fourth electromagnetic wave EB4 including a magnetic field component along the Z-direction orthogonal to the horizontal plane including the X-direction in which the second bonding region 14a" extends, the second bonding region 14a" can be heated efficiently by the fourth electromagnetic wave EB4. The electromagnetic wave irradiation unit 54 may be, for example, a microwave irradiation device which emits microwaves, but is not limited to this example, and a known electromagnetic wave irradiation unit may be suitably used.

The thermometer 56 detects the temperature of a region that is heated by irradiation with the fourth electromagnetic wave EB4 based on the control of the control unit 58. That is, the thermometer 56 measures the temperature of the second bonding region 14a". The thermometer 56 transmits the temperature information that is measured and acquired to the control unit 58. The thermometer 56 may be, for example, a thermoviewer which is a non-contact type thermometer which detects the temperature with infrared rays, but is not limited to this example. Although a non-contact type thermometer is illustrated in FIG. 8, the thermometer 56 may also be a contact-type thermometer, an example of which is an optical fiber thermometer.

The control unit 58 includes a storage unit and a processing unit. The storage unit includes a storage device such as a RAM, ROM, or flash memory, for example, and stores a software program to be processed by the processing part and data or the like to be referenced by the software program. In addition, the storage unit also functions as a storage region in which the processing unit temporarily stores processing results or the like. The processing unit fulfills a function in accordance with the content of the software program by reading out and processing the software program or the like from the storage unit. The control unit 58 controls the electromagnetic wave irradiation unit 54 and the thermometer 56.

The control unit 58 controls the fourth electromagnetic wave EB4 emitted by the electromagnetic wave irradiation unit 54 based on the temperature information obtained from the thermometer 56. Therefore, the control unit 58 can perform heat curing treatment by heating the second bonding region 14a" at a constant temperature within the semi-curing temperature range T2.

The second composite material 14" contains second carbon fibers 14f, as in the case of the second composite material 14"'. As in the case of the second carbon fibers 14f of the second composite material 14"' before electromagnetic wave heat treatment is performed by the third electromagnetic wave heating device 40, some or all of the second carbon fibers 14f of the second composite material 14" are preferably cut off at the border between the second bonding region 14a" and the second non-bonding region 14b before electromagnetic wave heat treatment is performed by the fourth electromagnetic wave heating device 50. When the second carbon fibers 14f are cut off, the current flowing through the second carbon fibers 14f is reduced across the second bonding region 14a" and the second non-bonding region 14b. Therefore, in the second composite material 14", the second bonding region 14a" can be clearly separated into a region heated by the fourth electromagnetic wave EB4, and the second non-bonding region 14b can be clearly separated into a region not heated by the fourth electromagnetic wave EB4. As a result, the second bonding region 14a" can be suitably placed in a semi-cured state. In addition, it is possible to suppress the imposition of an unnecessary thermal history on the second non-bonding region 14b.

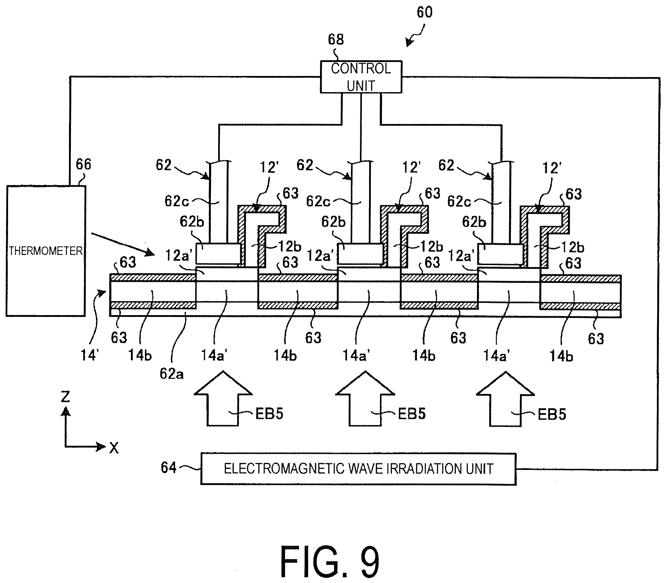

FIG. 9 is a schematic configuration diagram illustrating an example of a fifth electromagnetic wave heating device 60 used in the bonding method of the first embodiment of the present invention. The first bonding region 12a' of the first composite material 12' placed in the semi-cured state is brought into contact with the second bonding region 14a' of the second composite material 14' placed in a semi-cured state and pressed together, and then the fifth electromagnetic wave heating device 60 places the first bonding region 12a' and the second bonding region 14a' which are brought into contact and pressed together, in the cured state by heating. Here, the first composite material 12' represents a first composite material in which the thermosetting resin is in the semi-cured state in the first bonding region 12a' and the thermosetting resin is in the cured state in the first non-bonding region 12b. The first bonding region 12a' represents a first bonding region in which the thermosetting resin is in the semi-cured state. The second composite material 14' represents a second composite material in which the thermosetting resin is in the semi-cured state in the second bonding region 14a' and the thermosetting resin is in the cured state in the second non-bonding region 14b. The second bonding region 14a' represents a second bonding region in which the thermosetting resin is in the semi-cured state. The first bonding region 12a' becomes the first bonding region 12a as a result of assuming the cured state when heated. The second bonding region 14a' becomes the second bonding region 14a as a result of assuming the cured state when heated. The first bonding region 12a' and the second bonding region 14a' are bonded together as a result of assuming the cured state when heated in a state while in contact and pressed together. As a result of the first bonding region 12a' becoming the first bonding region 12a, the first composite material 12' becomes the first composite material 12. As a result of the second bonding region 14a' becoming the second bonding region 14a, the second composite material 14' becomes the second composite material 14. The first composite material 12' and the second composite material 14' form a bonded material 10 as a result of the first bonding region 12a' and the second bonding region 14a' being bonded together.

The fifth electromagnetic wave heating device 60 irradiates the first composite material 12' and the second composite material 14', the first non-bonding region 12b and the second non-bonding region 14b of which are covered by a fifth electromagnetic wave shield 63, with a fifth electromagnetic wave EB5 so as to place the first bonding region 12a' and the second bonding region 14a' exposed from the fifth electromagnetic wave shield 63 in the cured state by heating with the fifth electromagnetic wave EB5. The fifth electromagnetic wave shield 63 may be an aluminum foil or an aluminum plate, for example, but is not limited to these examples. In this case, the fifth electromagnetic wave heating device 60 irradiates the first composite material 12' and the second composite material 14' with the fifth electromagnetic wave EB5 after the fifth electromagnetic wave shield 63 clearly separates the first bonding region 12a' and the second bonding region 14a' into regions heated by the fifth electromagnetic wave EB5 and the first non-bonding region 12b and the second non-bonding region 14b into regions not heated by the fifth electromagnetic wave EB5. Therefore, the first bonding region 12a' and the second bonding region 14a' can be suitably placed in a cured state. In addition, it is possible to suppress the imposition of an unnecessary thermal history on the first non-bonding region 12b and the second non-bonding region 14b. The fifth electromagnetic wave shield 63 may be patterned with a material that is transparent with respect to electromagnetic waves and formed into a sheet in a case in which the surface on the side of the second non-bonding region 14b to which the first composite material 12' is not bonded is covered. In this case, the processing for covering the second non-bonding region 14b with the fifth electromagnetic wave shield 63 is simplified, and the precision of the covering position is enhanced, which is preferable.

As illustrated in FIG. 9, the fifth electromagnetic wave heating device 60 includes a pressing unit 62, an electromagnetic wave irradiation unit 64, a thermometer 66, and a control unit 68. The pressing unit 62 brings the first bonding region 12a' of the first composite material 12' placed in the semi-cured state into contact with the second bonding region 14a' of the second composite material 14' placed in the semi-cured state and presses the regions together. The pressing unit 62 includes a pressing support unit 62a, a pressure adding unit 62b, and a pressing cylinder 62c. The pressing support unit 62a and the pressure adding unit 62b are both formed with a material which is transparent with respect to electromagnetic waves. That is, the pressing support unit 62a and the pressure adding unit 62b do not affect the fifth electromagnetic wave EB5. The pressing support unit 62a is fixed and installed. The pressing support unit 62a supports the surface of the second composite material 14' in the -Z-direction, that is, the lower side in the vertical direction, from the -Z-direction, that is, the lower side in the vertical direction. The pressure adding unit 62b is supported from the +Z-direction, that is, the upper side in the vertical direction, via the pressing cylinder 62c. The pressure adding unit 62b is movably supported via the pressing cylinder 62c in the Z-direction, that is, the vertical direction, via the pressing cylinder 62c. The pressure adding unit 62b presses the surface in the +Z-direction, that is, the upper side in the vertical direction, of the first bonding region 12a' of the first composite material 12' from the +Z-direction, that is, the upper side in the vertical direction.

The pressure adding unit 62b is installed in the -Z-direction, that is, on the lower side in the vertical direction, on the pressing cylinder 62c. The pressing cylinder 62c is electrically connected to the control unit 68. The pressing cylinder 62c changes the pressure applied by the pressure adding unit 62b to the first bonding region 12a' of the first composite material 12' based on the control of the control unit 68. The pressing unit 62 preferably sets the pressure applied to the first bonding region 12a' of the first composite material 12' to approximately 800 kPa.

The electromagnetic wave irradiation unit 64 emits the fifth electromagnetic wave EB5 based on the control of the control unit 68. The electromagnetic wave irradiation unit 64 preferably emits a fifth electromagnetic wave EB5 including an electric field component along the horizontal plane including the X-direction in which the first bonding region 12a' and the second bonding region 14a' extend. When the electromagnetic wave irradiation unit 64 emits a fifth electromagnetic wave EB5 including an electric field component along the horizontal plane including the X-direction in which the first bonding region 12a' and the second bonding region 14a' extend, the first bonding region 12a' and the second bonding region 14a' can be heated efficiently by the fifth electromagnetic wave EB5. The electromagnetic wave irradiation unit 64 preferably emits a fifth electromagnetic wave EB5 including a magnetic field component along the Z-direction orthogonal to the horizontal plane including the X-direction in which the first bonding region 12a' and the second bonding region 14a' extend. When the electromagnetic wave irradiation unit 64 emits a fifth electromagnetic wave EB5 including a magnetic field component along the Z-direction orthogonal to the horizontal plane including the X-direction in which the first bonding region 12a' and the second bonding region 14a' extend, the first bonding region 12a' and the second bonding region 14a' can be heated efficiently by the fifth electromagnetic wave EB5. The electromagnetic wave irradiation unit 64 may be, for example, a microwave irradiation device which emits microwaves, but is not limited to this example, and a known electromagnetic wave irradiation unit may be suitably used.

The thermometer 66 detects the temperature of a region that is heated by irradiation with the fifth electromagnetic wave EB5 based on the control of the control unit 68. That is, the thermometer 66 measures the temperatures of the first bonding region 12a' and the second bonding region 14a'. The thermometer 66 transmits the temperature information that is measured and acquired to the control unit 68. The thermometer 66 may be, for example, a thermoviewer which is a non-contact type thermometer which detects the temperature with infrared rays, but is not limited to this example. Although a non-contact type thermometer is illustrated in FIG. 9, the thermometer 66 may also be a contact-type thermometer, an example of which is an optical fiber thermometer.

The control unit 68 includes a storage unit and a processing unit. The storage unit includes a storage device such as a RAM, ROM, or flash memory, for example, and stores a software program to be processed by the processing part and data or the like to be referenced by the software program. In addition, the storage unit also functions as a storage region in which the processing unit temporarily stores processing results or the like. The processing unit fulfills a function in accordance with the content of the software program by reading out and processing the software program or the like from the storage unit. The control unit 68 controls the pressing unit 62, the electromagnetic wave irradiation unit 64, and the thermometer 66.

The control unit 68 controls the pressing unit 62. Specifically, the control unit 68 controls the pressure applied to the first bonding region 12a' of the first composite material 12' by controlling the pressing cylinder 62c of the pressing unit 62. The control unit 68 controls the fifth electromagnetic wave EB5 emitted by the electromagnetic wave irradiation unit 64 based on the temperature information obtained from the thermometer 66. Therefore, the control unit 68 can perform heat curing treatment by heating the first bonding region 12a' and the second bonding region 14a' at a constant temperature within the curing temperature range T1.

The first composite material 12' contains first carbon fibers 12f, as in the case of the first composite material 12". As in the case of the first carbon fibers 12f of the first composite material 12" before electromagnetic wave heat treatment is performed by the second electromagnetic wave heating device 30, some or all of the first carbon fibers 12f of the first composite material 12' are preferably cut off at the border between the first bonding region 12a' and the first non-bonding region 12b before electromagnetic wave heat treatment is performed by the fifth electromagnetic wave heating device 60. When the first carbon fibers 12f are cut off, the current flowing through the first carbon fibers 12f is reduced across the first bonding region 12a' and the first non-bonding region 12b. Therefore, in the first composite material 12', the first bonding region 12a' can be clearly separated into a region heated by the fifth electromagnetic wave EB5, and the first non-bonding region 12b can be clearly separated into a region not heated by the fifth electromagnetic wave EB5. As a result, the first bonding region 12a' can be suitably placed in a cured state. In addition, it is possible to suppress the imposition of an unnecessary thermal history on the first non-bonding region 12b.

The second composite material 14' contains second carbon fibers 14f, as in the case of the second composite material 14". As in the case of the second carbon fibers 14f of the second composite material 14" before electromagnetic wave heat treatment is performed by the fourth electromagnetic wave heating device 50, some or all of the second carbon fibers 14f of the second composite material 14' are preferably cut off at the border between the second bonding region 14a' and the second non-bonding region 14b before electromagnetic wave heat treatment is performed by the fifth electromagnetic wave heating device 60. When the second carbon fibers 14f are cut off, the current flowing through the second carbon fibers 14f is reduced across the second bonding region 14a' and the second non-bonding region 14b. Therefore, the second composite material 14' can be clearly separated into the second bonding region 14a' as a region heated by the fifth electromagnetic wave EB5 and the second non-bonding region 14b as a region not heated by the fifth electromagnetic wave EB5. As a result, the second bonding region 14a' can be suitably placed in a cured state. In addition, it is possible to suppress the imposition of an unnecessary thermal history on the second non-bonding region 14b.

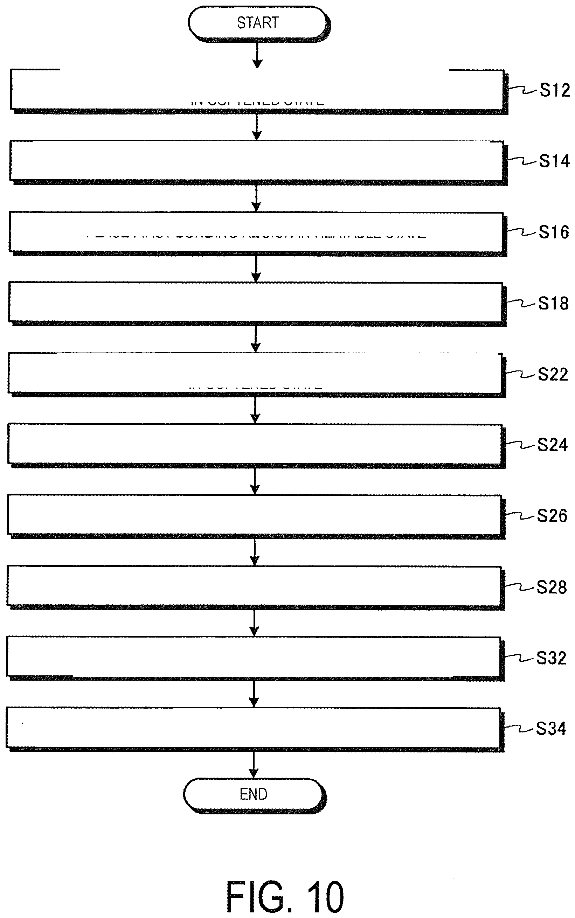

The bonding method of the first embodiment, which is the effect of a bonding system including the first electromagnetic wave heating device 20, the second electromagnetic wave heating device 30, the third electromagnetic wave heating device 40, the fourth electromagnetic wave heating device 50, and the fifth electromagnetic wave heating device 60 having such a configuration, will be described hereinafter. FIG. 10 is a flowchart of the bonding method of the first embodiment of the present invention.

As illustrated in FIG. 10, the bonding method of the first embodiment includes a first curing preparation step S12, a first curing step S14, a first semi-curing preparation step S16, a first semi-curing step S18, a second curing preparation step S22, a second curing step S24, a second semi-curing preparation step S26, a second semi-curing step S28, a contact pressure step S32, and a heat bonding step S34. Hereinafter, the first curing preparation step S12, the first curing step S14, the first semi-curing preparation step S16, the first semi-curing step S18, the second curing preparation step S22, the second curing step S24, the second semi-curing preparation step S26, the second semi-curing step S28, the contact pressure step S32, and the heat bonding step S34 will be appropriately called step S12, step S14, step S16, step S18, step S22, step S24, step S26, step S28, step S32, and step S34, respectively.

In the bonding method of the first embodiment, steps S12, S14, S16, and S18 are processes for the first composite material, and these will be called "a first group of processes" hereinafter. In the bonding method of the first embodiment, steps S22, S24, S26, and S28 are processes for the second composite material, and these will be called "a second group of processes" hereinafter. In the bonding method of the first embodiment, steps S32 and S34 are processes for the first and second composite materials, and these will be called "a third group of processes" hereinafter. In the bonding method of the first embodiment, the first group of processes and the second group of processes are independent. Therefore, in the bonding method of the first embodiment, although it is described in FIG. 10 that the second group of processes are performed after the first group of processes, the method is not limited to this case. The second group of processes may be performed before the first group of processes, or the first group of processes and the second group of processes may be performed in parallel. In addition, in FIG. 10, steps S16 and S18 are performed after steps S12 and S14 in the first group of processes, but steps S12 and S14 may also be performed after steps S16 and S18. In addition, in FIG. 10, steps S26 and S28 are performed after steps S22 and S24 in the second group of processes, but steps S22 and S24 may also be performed after steps S26 and S28.

In the first composite material 12"', the first bonding region 12a" is placed in a state in which the region is not heatable by the first electromagnetic wave EB1 by covering the first bonding region 12a" with the first electromagnetic wave shield 22. That is, in the first composite material 12"', the first bonding region 12a" is prepared to be maintained in the softened state by covering the first bonding region 12a" with the first electromagnetic wave shield 22 (step S12). In step S12, the first composite material 12'" is clearly separated by the first electromagnetic wave shield 22 into the first non-bonding region 12b' as a region heated by the first electromagnetic wave EB1 and the first bonding region 12a" as a region not heated by the first electromagnetic wave EB1. Therefore, the first bonding region 12a" can be suitably maintained in the softened state in the first curing step S14, which is a subsequent process, and thus the first bonding region 12a" can be suitably placed in the semi-cured state in the first semi-curing step S18, which is a subsequent process.

In step S12, some or all of the first carbon fibers 12f are preferably cut off at the border between the first bonding region 12a" and the first non-bonding region 12b'. In this case, the current flowing through the first carbon fibers 12f is reduced across the first bonding region 12a" and the first non-bonding region 12b'. Therefore, the first composite material 12'" can be clearly separated into the first non-bonding region 12b' as a region heated by the first electromagnetic wave EB1 and the first bonding region 12a" as a region not heated by the first electromagnetic wave EB1. As a result, the first bonding region 12a" can be suitably maintained in the softened state, and thus the first bonding region 12a" can be suitably placed in the semi-cured state in the first semi-curing step S18, which is a subsequent process.

After the process of step S12 is performed, the first electromagnetic wave heating device 20 places a first composite material 12"', which is prepared so that a first bonding region 12a" is maintained in the softened state, in the cured state by heating a first non-bonding region 12b'. Specifically, the first electromagnetic wave heating device 20 irradiates the first composite material 12'", the first bonding region 12a" of which is covered by a first electromagnetic wave shield 22, with a first electromagnetic wave EB1 so as to place the first non-bonding region 12b' exposed from the first electromagnetic wave shield 22 in the cured state by heating with the first electromagnetic wave EB1 (step S14). The first non-bonding region 12b' becomes the first non-bonding region 12b as a result of assuming the cured state when heated. As a result of the first non-bonding region 12b' becoming the first non-bonding region 12b, the first composite material 12'" becomes the first composite material 12".

After the process of step S14 is performed, in the first composite material 12", the first bonding region 12a" is prepared in a state in which the region is heatable by the second electromagnetic wave EB2 by covering the first non-bonding region 12b with the second electromagnetic wave shield 32 and placing the first bonding region 12a" in an exposed state (step S16). In step S16, the first composite material 12'" is clearly separated by the second electromagnetic wave shield 32 into the first bonding region 12a" as a region heated by the second electromagnetic wave EB2 and the first non-bonding region 12b as a region not heated by the second electromagnetic wave EB2. Therefore, the first bonding region 12a" can be suitably placed in a semi-cured state in the first semi-curing step S18, which is a subsequent process. In addition, it is possible to suppress the imposition of an unnecessary thermal history on the first non-bonding region 12b.

In step S16, some or all of the first carbon fibers 12f are preferably cut off at the border between the first bonding region 12a" and the first non-bonding region 12b. In this case, the current flowing through the first carbon fibers 12f is reduced across the first bonding region 12a" and the first non-bonding region 12b. Therefore, the first composite material 12" can be clearly separated into the first bonding region 12a" as a region heated by the second electromagnetic wave EB2 and the first non-bonding region 12b as a region not heated by the second electromagnetic wave EB2. As a result, the first bonding region 12a" can be suitably placed in a semi-cured state in the first semi-curing step S18, which is a subsequent process. In addition, it is possible to suppress the imposition of an unnecessary thermal history on the first non-bonding region 12b.

After the process of step S16 is performed, the second electromagnetic wave heating device 30 places a first composite material 12"', which is prepared so that a first bonding region 12a" is heatable, in the cured state by heating the first bonding region 12a". Specifically, the second electromagnetic wave heating device 30 irradiates the first composite material 12", the first non-bonding region 12b of which is covered by a second electromagnetic wave shield 32, with a second electromagnetic wave EB2 so as to place the first bonding region 12a" exposed from the second electromagnetic wave shield 32 in the semi-cured state by heating with the second electromagnetic wave EB2 (step S18). The first bonding region 12a" becomes the first bonding region 12a' as a result of assuming the semi-cured state when heated. As a result of the first bonding region 12a" becoming the first bonding region 12a', the first composite material 12" becomes the first composite material 12'.

In the second composite material 14"', the second bonding region 14a" is placed in a state in which the region is not heatable by the third electromagnetic wave EB3 by covering the second bonding region 14a" with the third electromagnetic wave shield 42. That is, in the second composite material 14'", the second bonding region 14a" is prepared to be maintained in the softened state by covering the second bonding region 14a" with the third electromagnetic wave shield 42 (step S22). In step S22, the second composite material 14"' is clearly separated by the third electromagnetic wave shield 42 into the second non-bonding region 14b' as a region heated by the third electromagnetic wave EB3 and the second bonding region 14a" as a region not heated by the third electromagnetic wave EB3. Therefore, the second bonding region 14a" can be suitably maintained in the softened state in the second curing step S24, which is a subsequent process, and thus the second bonding region 14a" can be suitably placed in the semi-cured state in the second semi-curing step S28, which is a subsequent process.

In step S22, some or all of the second carbon fibers 14f are preferably cut off at the border between the second bonding region 14a" and the second non-bonding region 14b'. In this case, the current flowing through the second carbon fibers 14f is reduced across the second bonding region 14a" and the second non-bonding region 14b'. Therefore, the second composite material 14'" can be clearly separated into the second non-bonding region 14b' as a region heated by the third electromagnetic wave EB3 and the second bonding region 14a" as a region not heated by the third electromagnetic wave EB3. As a result, the second bonding region 14a" can be suitably maintained in the softened state, and thus the second bonding region 14a" can be suitably placed in the semi-cured state in the second semi-curing step S28, which is a subsequent process.

After the process of step S22 is performed, the third electromagnetic wave heating device 40 places a second composite material 14"', which is prepared so that a second bonding region 14a" is maintained in the softened state, in the cured state by heating a second non-bonding region 14b'. Specifically, the third electromagnetic wave heating device 40 irradiates the second composite material 14'", the second bonding region 14a" of which is covered by a third electromagnetic wave shield 42, with a third electromagnetic wave EB3 so as to place the second non-bonding region 14b' exposed from the third electromagnetic wave shield 42 in the cured state by heating with the third electromagnetic wave EB3 (step S24). The second non-bonding region 14b' becomes the second non-bonding region 14b as a result of assuming the cured state when heated. As a result of the second non-bonding region 14b' becoming the second non-bonding region 14b, the second composite material 14'" becomes the second composite material 14".

After the process of step S24 is performed, in the second composite material 14", the second bonding region 14a" is prepared in a state in which the region is heatable by the fourth electromagnetic wave EB4 by covering the second non-bonding region 14b with the fourth electromagnetic wave shield 52 and placing the second bonding region 14a" in an exposed state (step S26). In step S26, the second composite material 14" is clearly separated by the fourth electromagnetic wave shield 52 into the second bonding region 14a" as a region heated by the fourth electromagnetic wave EB4 and the second non-bonding region 14b as a region not heated by the fourth electromagnetic wave EB4. Therefore, the second bonding region 14a" can be suitably placed in a semi-cured state in the second semi-curing step S28, which is a subsequent process. In addition, it is possible to suppress the imposition of an unnecessary thermal history on the second non-bonding region 14b.

In step S26, some or all of the second carbon fibers 14f are preferably cut off at the border between the second bonding region 14a" and the second non-bonding region 14b. In this case, the current flowing through the second carbon fibers 14f is reduced across the second bonding region 14a" and the second non-bonding region 14b. Therefore, the second composite material 14" can be clearly separated into the second bonding region 14a" as a region heated by the fourth electromagnetic wave EB4 and the second non-bonding region 14b as a region not heated by the fourth electromagnetic wave EB4. As a result, the second bonding region 14a" can be suitably placed in a semi-cured state in the second semi-curing step S28, which is a subsequent process. In addition, it is possible to suppress the imposition of an unnecessary thermal history on the second non-bonding region 14b.

After the process of step S26 is performed, the fourth electromagnetic wave heating device 50 places a second composite material 14", which is prepared so that a second bonding region 14a" is heatable, in the cured state by heating the second bonding region 14a". Specifically, the fourth electromagnetic wave heating device 50 irradiates the second composite material 14", the second non-bonding region 14b of which is covered by a fourth electromagnetic wave shield 52, with a fourth electromagnetic wave EB4 so as to place the second bonding region 14a" exposed from the fourth electromagnetic wave shield 52 in the semi-cured state by heating with the fourth electromagnetic wave EB4 (step S28). The second non-bonding region 14a" becomes the second non-bonding region 14a' as a result of assuming the semi-cured state when heated. As a result of the second non-bonding region 14a" becoming the second non-bonding region 14a', the second composite material 14" becomes the second composite material 14'.

After the process of step S18 and the process of step S28 are performed, the first bonding region 12a' of the first composite material 12' placed in the semi-cured state is brought into contact with the second bonding region 14a' of the second composite material 14' placed in the semi-cured state and are pressed together (step S32). In step S32, the first non-bonding region 12b and the second non-bonding region 14b in the first composite material 12' and the second composite material 14' are preferably covered with the fifth electromagnetic wave shield 63. In this case, the first composite material 12' and the second composite material 14' are clearly separated by the fifth electromagnetic wave shield 63 into the first bonding region 12a' and the second bonding region 14a' as regions heated by the fifth electromagnetic wave EB5 and the first non-bonding region 12b and the second non-bonding region 14b as regions not heated by the fifth electromagnetic wave EB5. Therefore, the first bonding region 12a' and the second bonding region 14a' can be suitably placed in a cured state in the heat bonding step S34, which is a subsequent process. In addition, it is possible to suppress the imposition of an unnecessary thermal history on the first non-bonding region 12b and the second non-bonding region 14b.

In step S32, some or all of the first carbon fibers 12f are preferably cut off at the border between the first bonding region 12a' and the first non-bonding region 12b. In this case, the current flowing through the first carbon fibers 12f is reduced across the first bonding region 12a' and the first non-bonding region 12b. Therefore, the first composite material 12' can be clearly separated into the first bonding region 12a' as a region heated by the fifth electromagnetic wave EB5 and the first non-bonding region 12b as a region not heated by the fifth electromagnetic wave EB5. As a result, the first bonding region 12a' can be suitably placed in a cured state. In addition, it is possible to suppress the imposition of an unnecessary thermal history on the first non-bonding region 12b.

In step S32, some or all of the second carbon fibers 14f are preferably cut off at the border between the second bonding region 14a' and the second non-bonding region 14b. In this case, the current flowing through the second carbon fibers 14f is reduced across the second bonding region 14a' and the second non-bonding region 14b. Therefore, the second composite material 14' can be clearly separated into the second bonding region 14a' as a region heated by the fifth electromagnetic wave EB5 and the second non-bonding region 14b as a region not heated by the fifth electromagnetic wave EB5. As a result, the second bonding region 14a' can be suitably placed in a cured state. In addition, it is possible to suppress the imposition of an unnecessary thermal history on the second non-bonding region 14b.

After the process of step S32 is performed, the first bonding region 12a' of the first composite material 12' placed in the semi-cured state is brought into contact with the second bonding region 14a' of the second composite material 14' placed in a semi-cured state and pressed together, and then the fifth electromagnetic wave heating device 60 places the first bonding region 12a' and the second bonding region 14a' which are brought into contact and pressed together, in the cured state by heating. Specifically, the fifth electromagnetic wave heating device 60 irradiates the first composite material 12' and the second composite material 14', the first non-bonding region 12b and the second non-bonding region 14b of which are covered by a fifth electromagnetic wave shield 63, with a fifth electromagnetic wave EB5 so as to place the first bonding region 12a' and the second bonding region 14a' exposed from the fifth electromagnetic wave shield 63 in the cured state by heating with the fifth electromagnetic wave EB5 (step S34).

In step S34, the first bonding region 12a' becomes the first bonding region 12a as a result of assuming the cured state when heated. The second bonding region 14a' becomes the second bonding region 14a as a result of assuming the cured state when heated. The first bonding region 12a' and the second bonding region 14a' are bonded together as a result of assuming the cured state when heated in a state of being in contact and pressed together. As a result of the first bonding region 12a' becoming the first bonding region 12a, the first composite material 12' becomes the first composite material 12. As a result of the second bonding region 14a' becoming the second bonding region 14a, the second composite material 14' becomes the second composite material 14. The first composite material 12' and the second composite material 14' form a bonded material 10 as a result of the first bonding region 12a' and the second bonding region 14a' being bonded together.

Since the bonding method of the first embodiment includes a series of steps such as those described above, regions to be bonded can be suitably placed in a semi-cured state, and the composite materials can be efficiently bonded together while the quality of the bonding strength of the composite materials is suitably maintained. The bonding method of the first embodiment does not require preparation steps such as a lamination step, a debulking step, or a bagging step. In the bonding method of the first embodiment, composite materials are bonded together via chemical bonds, and there are established quality control techniques for the bonded portions. Thus, there is no need for a secondary bonding step or a co-bonding step. As a result, the bonding method of the first embodiment can dramatically reduce the production cost of the bonded material 10.

### Second Embodiment

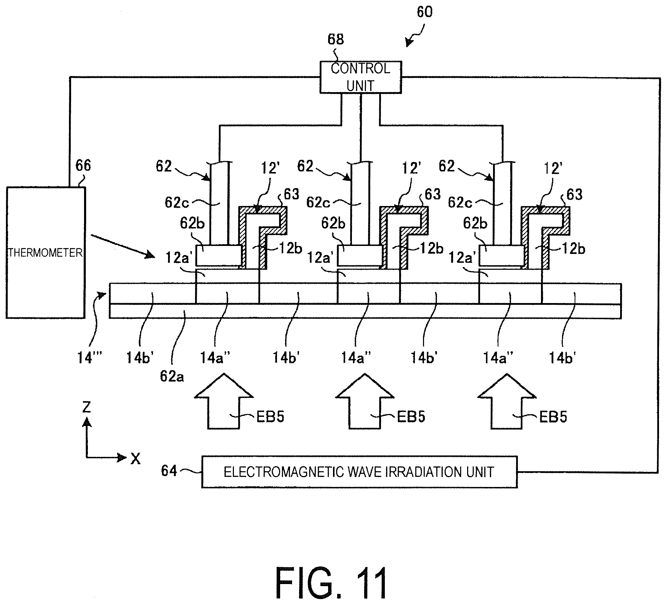

FIG. 11 is a schematic configuration diagram illustrating an example of a fifth electromagnetic wave heating device 60 used in the bonding method of the second embodiment of the present invention. The bonding method of the second embodiment is one in which steps S22, S24, S26, and S28, which are the second group of processes, are omitted from the bonding method of the first embodiment. In the description of the second embodiment, the same group of symbols as in the first embodiment will be used for configurations that are the same as in the first embodiment, and detailed descriptions thereof will be omitted.

In the bonding method of the second embodiment, the fifth electromagnetic wave heating device 60 performs electromagnetic wave heat treatment on the second composite material 14"' instead of the second composite material 14' used in the bonding method of the first embodiment. Specifically, in the bonding method of the second embodiment, the first bonding region 12a' of the first composite material 12' placed in the semi-cured state is brought into contact with the second bonding region 14a" of the second composite material 14'", which is in the softened state, and pressed together, and the fifth electromagnetic wave heating device 60 places the first bonding region 12a', the second bonding region 14a", and the second non-bonding region 14b' which are brought into contact and pressed together, in the cured state by heating. The second non-bonding region 14a" becomes the second non-bonding region 14a as a result of assuming the cured state after leaving the semi-cured state when heated. The second non-bonding region 14b' becomes the second non-bonding region 14b as a result of assuming the cured state when heated. The first bonding region 12a' and the second bonding region 14a" are bonded together as a result of assuming the cured state when heated in a state of being in contact and pressed together. As a result of the second bonding region 14a" becoming the second bonding region 14a and the second non-bonding region 14b' becoming the second non-bonding region 14b, the second composite material 14'" becomes the second composite material 14. The first composite material 12' and the second composite material 14'" form a bonded material 10 as a result of the first bonding region 12a' and the second bonding region 14a" being bonded together.

The fifth electromagnetic wave heating device 60 irradiates the first composite material 12', the first non-bonding region 12b of which is covered by a fifth electromagnetic wave shield 63, and the second composite material 14'" with a fifth electromagnetic wave EB5 so as to place the first bonding region 12a' exposed from the fifth electromagnetic wave shield 63, the second bonding region 14a", and the second non-bonding region 14b' in the cured state by heating with the fifth electromagnetic wave EB5. In this case, the fifth electromagnetic wave heating device 60 irradiates the first composite material 12' and the second composite material 14'" with the fifth electromagnetic wave EB5 after the fifth electromagnetic wave shield 63 clearly separates the first composite material 12' and the second composite material 14'" into the first bonding region 12a', the second bonding region 14a", and the second non-bonding region 14b' as regions heated by the fifth electromagnetic wave EB5 and the first non-bonding region 12b as a region not heated by the fifth electromagnetic wave EB5. Therefore, the first bonding region 12a', the second bonding region 14a", and the second non-bonding region 14b' can be suitably placed in a cured state. In addition, it is possible to suppress the imposition of an unnecessary thermal history on the first non-bonding region 12b.

Since the bonding method of the second embodiment is one in which steps S22, S24, S26, and S28, which are the second group of processes, are omitted, bonding can be achieved more easily than in the bonding method of the first embodiment. The bonding method of the second embodiment can more dramatically reduce the production cost of the bonded material 10.

In the bonding method of the second embodiment, the pressing support unit 62a of the fifth electromagnetic wave heating device 60 supports the second composite material 14'" in the softened state, and thereby the same bonded material 10 as in the bonding method of the first embodiment can be produced. The bonding method of the second embodiment is preferable when the shape of the second composite material 14'" can be easily supported by the pressing support unit 62a of the fifth electromagnetic wave heating device 60.

### Third Embodiment

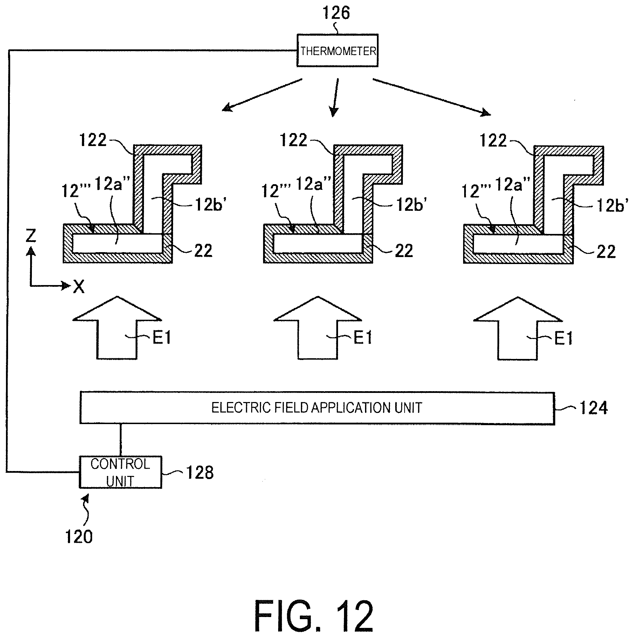

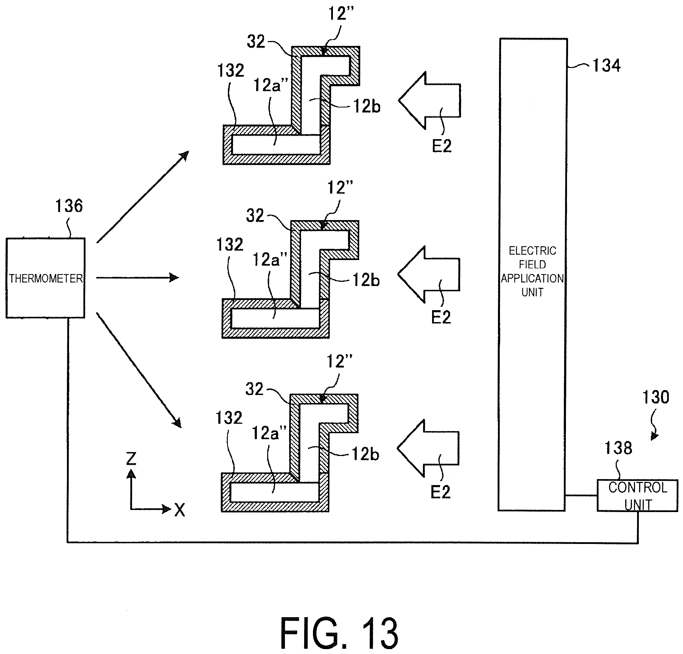

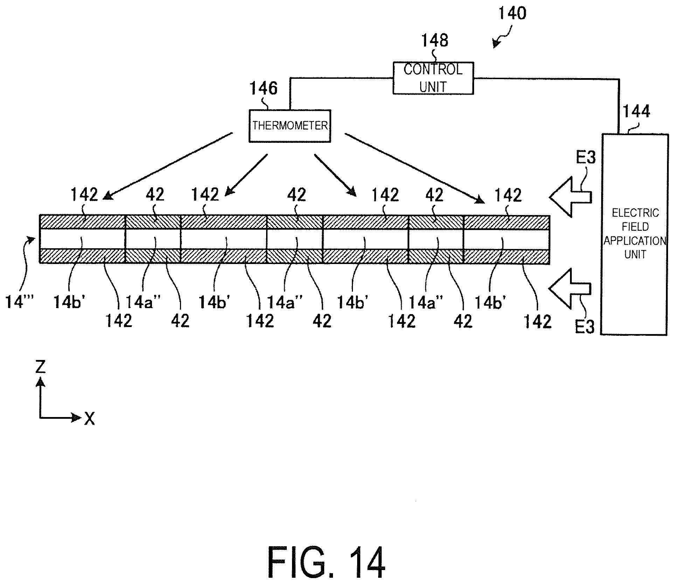

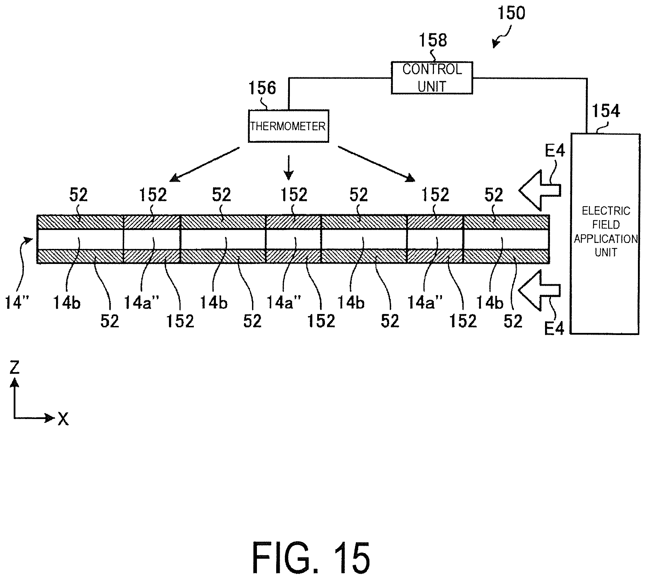

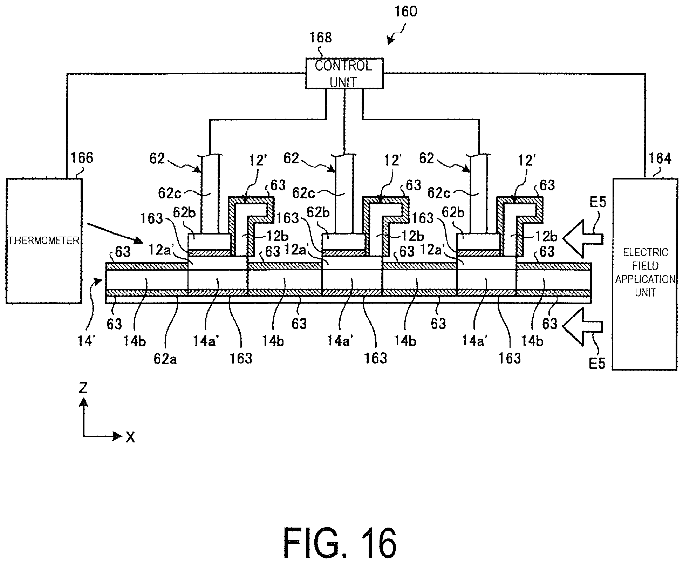

FIG. 12 is a schematic configuration diagram illustrating an example of a first electric field heating device 120 used in the bonding method of the third embodiment of the present invention. FIG. 13 is a schematic configuration diagram illustrating an example of a second electric field heating device 130 used in the bonding method of the third embodiment of the present invention. FIG. 14 is a schematic configuration diagram illustrating an example of a third electric field heating device 140 used in the bonding method of the third embodiment of the present invention. FIG. 15 is a schematic configuration diagram illustrating an example of a fourth electric field heating device 150 used in the bonding method of the third embodiment of the present invention. FIG. 16 is a schematic configuration diagram illustrating an example of a fifth electric field heating device 160 used in the bonding method of the third embodiment of the present invention. The bonding method of the third embodiment is one in which, in the bonding method of the first embodiment, metal nanocoil treatment is added to the electromagnetic wave shield treatment in steps S12, S16, S22, S26, and S32, and the electromagnetic wave heat treatment in steps S14, S18, S24, S28, and S34 is changed to electric field heat treatment. In the description of the third embodiment, the same group of symbols as in the first embodiment will be used for configurations that are the same as in the first embodiment, and detailed descriptions thereof will be omitted.

A metal nanocoil generates a current internally in response to an applied electric field and a magnetic field, and heat is generated by the electrical resistance of the metal nanocoil itself. Therefore, a prescribed position can be selectively placed in a heatable state with an electric field or a magnetic field by applying a metal nanocoil to a prescribed position or attaching a metal nanocoil sheet to which a metal nanocoil is applied to a prescribed position. The diameter of the metal nanocoil is approximately 100 µm. The diameter of the metal wire used to form the metal nanocoil is approximately 90 nm. The metal nanocoil can be applied by dispersing the metal nanocoil in a solution and spraying the solution.

As illustrated in FIG. 12, the first electric field heating device 120 includes an electric field application unit 124, a thermometer 126, and a control unit 128. The first electric field heating device 120 applies a first electric field E1 with the electric field application unit 124 instead of emitting a first electromagnetic wave EB1 with the electromagnetic wave irradiation unit 24 in the first electromagnetic wave heating device 20. In addition, the process performed before the first electric field E1 is applied to the first composite material 12"' by the first electric field heating device 120 differs from the process performed before the first composite material 12'" is irradiated with the first electromagnetic wave EB1 by the first electromagnetic wave heating device 20. Specifically, the first electric field heating device 120 applies the first electric field E1 to the first composite material 12"', in which the first bonding region 12a" is covered by the first electromagnetic wave shield 22 and a first metal nanocoil sheet 122 is attached to the first non-bonding region 12b', so as to place the first non-bonding region 12b' to which the first metal nanocoil sheet 122 is attached in the cured state by heating with the first electric field E1.

The electric field application unit 124 applies the first electric field E1 based on the control of the control unit 128. The electric field application unit 124 preferably applies the first electric field E1 along the vertical plane including the Z-direction in which the first non-bonding region 12b' extends. When the electric field application unit 124 applies the first electric field E1 along the vertical plane including the Z-direction in which the first non-bonding region 12b' extends, the first non-bonding region 12b' can be heated efficiently by the first electric field E1. The electric field application unit 124 may be, a power supply and a pair of electrodes, but is not limited to this example, and a known electric field application unit may be suitably used.

The thermometer 126 operates based on the control of the control unit 128 and transmits temperature information to the control unit 128. The thermometer 126 is the same as the thermometer 26 with the exception that the thermometer 126 operates based on the control of the control unit 128 and transmits temperature information to the control unit 128. The control unit 128 controls the electric field application unit 124 and the thermometer 126. The control unit 128 controls the first electric field E1 applied by the electric field application unit 124 based on the temperature information obtained from the thermometer 126. The control unit 128 is the same as the control unit 28 with the exception that the control unit 128 controls the electric field application unit 124 and the thermometer 126 and controls the first electric field E1 applied by the electric field application unit 124 based on the temperature information obtained from the thermometer 126.

The first electric field heating device 120 applies the first electric field E1 to the first composite material 12'" after the first electromagnetic wave shield 22 and the first metal nanocoil sheet 122 clearly separate the first composite material 12"' into the first non-bonding region 12b' as a region heated by the first electric field E1 and the first bonding region 12a" as a region not heated by the first electric field E1. Therefore, the first bonding region 12a" can be suitably maintained in the softened state, and thus the first bonding region 12a" can be suitably placed in the semi-cured state in a subsequent process. That is, the first electromagnetic wave shield 22 and the first metal nanocoil sheet 122 can suitably separate the first composite material 12'" into a heated region and an unheated region.

As illustrated in FIG. 13, the second electric field heating device 130 includes an electric field application unit 134, a thermometer 136, and a control unit 138. The second electric field heating device 130 applies a second electric field E2 with the electric field application unit 134 instead of emitting a second electromagnetic wave EB2 with the electromagnetic wave irradiation unit 34 in the second electromagnetic wave heating device 30. In addition, the process performed before the second electric field E2 is applied to the first composite material 12" by the second electric field heating device 130 differs from the process performed before the first composite material 12" is irradiated with the second electromagnetic wave EB2 by the second electromagnetic wave heating device 30. Specifically, the second electric field heating device 130 applies the second electric field E2 to the first composite material 12", in which the first non-bonding region 12b is covered by the second electromagnetic wave shield 32 and a second metal nanocoil sheet 132 is attached to the first bonding region 12a", so as to place the first bonding region 12a" to which the second metal nanocoil sheet 132 is attached in the semi-cured state by heating with the second electric field E2.

The electric field application unit 134 applies the second electric field E2 based on the control of the control unit 138. The electric field application unit 134 preferably applies the second electric field E2 along the horizontal plane including the X-direction in which the first bonding region 12a" extends. When the electric field application unit 134 applies the second electric field E2 along the horizontal plane including the X-direction in which the first bonding region 12a" extends, the first bonding region 12a" can be heated efficiently by the second electric field E2. The electric field application unit 134 may be a power supply and a pair of electrodes, but is not limited to this example, and a known electric field application unit may be suitably used.

The thermometer 136 operates based on the control of the control unit 138 and transmits temperature information to the control unit 138. The thermometer 136 is the same as the thermometer 36 with the exception that the thermometer 136 operates based on the control of the control unit 138 and transmits temperature information to the control unit 138. The control unit 138 controls the electric field application unit 134 and the thermometer 136. The control unit 138 controls the second electric field E2 applied by the electric field application unit 134 based on the temperature information obtained from the thermometer 136. The control unit 138 is the same as the control unit 38 with the exception that the control unit 138 controls the electric field application unit 134 and the thermometer 136 and that the control unit 138 controls the second electric field E2 applied by the electric field application unit 134 based on the temperature information obtained from the thermometer 136.

The second electric field heating device 130 applies the second electric field E2 to the first composite material 12" after the second electromagnetic wave shield 32 and the second metal nanocoil sheet 132 clearly separate the first composite material 12" into the first bonding region 12a' as a region heated by the second electric field E2 and the first non-bonding region 12b as a region not heated by the second electric field E2. Therefore, the first bonding region 12a" can be suitably placed in a semi-cured state. That is, the second first electromagnetic wave shield 32 and the second metal nanocoil sheet 132 can suitably separate the first composite material 12" into a heated region and an unheated region.

As illustrated in FIG. 14, the third electric field heating device 140 includes an electric field application unit 144, a thermometer 146, and a control unit 148. The third electric field heating device 140 applies a third electric field E3 with the electric field application unit 144 instead of emitting a third electromagnetic wave EB3 with the electromagnetic wave irradiation unit 44 in the third electromagnetic wave heating device 40. In addition, the process performed before the third electric field E3 is applied to the second composite material 14'" by the third electric field heating device 140 differs from the process performed before the second composite material 14"' is irradiated with the third electromagnetic wave EB3 by the third electromagnetic wave heating device 40. Specifically, the third electric field heating device 140 applies the third electric field E3 to the second composite material 14'", in which the second bonding region 14a" is covered by the third electromagnetic wave shield 42 and a third metal nanocoil sheet 142 is attached to the second non-bonding region 14b', so as to place the second non-bonding region 14b' to which the third metal nanocoil sheet 142 is attached in the cured state by heating with the third electric field E3.

The electric field application unit 144 applies the third electric field E3 based on the control of the control unit 148. The electric field application unit 144 preferably applies the third electric field E3 along a direction orthogonal to the direction along the horizontal plane in which the second non-bonding region 14b' extends, that is, the Z-direction. When the electric field application unit 144 applies the third electric field E3 along a direction orthogonal to the direction along the horizontal plane in which the second non-bonding region 14b' extends, the second non-bonding region 14b' can be heated efficiently by the third electric field E3. The electric field application unit 144 may be, a power supply and a pair of electrodes, but is not limited to this example, and a known electric field application unit may be suitably used.

The thermometer 146 operates based on the control of the control unit 148 and transmits temperature information to the control unit 148. The thermometer 146 is the same as the thermometer 46 with the exception that the thermometer 146 operates based on the control of the control unit 148 and transmits temperature information to the control unit 148. The control unit 148 controls the electric field application unit 144 and the thermometer 146. The control unit 148 controls the third electric field E3 applied by the electric field application unit 144 based on the temperature information obtained from the thermometer 146. The control unit 148 is the same as the control unit 48 with the exception that the control unit 148 controls the electric field application unit 144 and the thermometer 146, and that the control unit 148 controls the third electric field E3 applied by the electric field application unit 144 based on the temperature information obtained from the thermometer 146.

The third electric field heating device 140 applies the third electric field E3 to the second composite material 14'" after the third electromagnetic wave shield 42 and the third metal nanocoil sheet 142 clearly separate the second composite material 14'" into the second non-bonding region 14b' as a region heated by the third electric field E3 and the second bonding region 14a" as a region not heated by the third electric field E3. Therefore, the second bonding region 14a" can be suitably maintained in the softened state, and thus the second bonding region 14a" can be suitably placed in the semi-cured state in a subsequent process. That is, the third electromagnetic wave shield 42 and the third metal nanocoil sheet 142 can suitably separate the second composite material 14'" into a heated region and an unheated region.

As illustrated in FIG. 15, the fourth electric field heating device 150 includes an electric field application unit 154, a thermometer 156, and a control unit 158. The fourth electric field heating device 150 applies a fourth electric field E4 with the electric field application unit 154 instead of emitting a fourth electromagnetic wave EB4 with the electromagnetic wave irradiation unit 54 in the fourth electromagnetic wave heating device 50. In addition, the process performed before the fourth electric field E4 is applied to the second composite material 14" by the fourth electric field heating device 150 differs from the process performed before the second composite material 14" is irradiated with the fourth electromagnetic wave EB4 by the fourth electromagnetic wave heating device 50. Specifically, the fourth electric field heating device 150 applies the fourth electric field E4 to the second composite material 14", in which the second non-bonding region 14b is covered by the fourth electromagnetic wave shield 52 and a fourth metal nanocoil sheet 152 is attached to the second bonding region 14a", so as to place the second bonding region 14a" to which the fourth metal nanocoil sheet 152 is attached in the semi-cured state by heating with the fourth electric field E4.

The electric field application unit 154 applies the fourth electric field E4 based on the control of the control unit 158. The electric field application unit 154 preferably applies the fourth electric field E4 along a direction orthogonal to the direction along the horizontal plane in which the second bonding region 14a" extends, that is, the Z-direction. When the electric field application unit 154 applies the fourth electric field E4 along a direction orthogonal to the direction along the horizontal plane in which the second bonding region 14a" extends, the second bonding region 14a" can be heated efficiently by the fourth electric field E4. The electric field application unit 154 may be a power supply and a pair of electrodes, but is not limited to this example, and a known electric field application unit may be suitably used.

The thermometer 156 operates based on the control of the control unit 158 and transmits temperature information to the control unit 158. The thermometer 156 is the same as the thermometer 56 with the exception that the thermometer 156 operates based on the control of the control unit 158 and transmits temperature information to the control unit 158. The control unit 158 controls the electric field application unit 154 and the thermometer 156. The control unit 158 controls the fourth electric field E4 applied by the electric field application unit 154 based on the temperature information obtained from the thermometer 156. The control unit 158 is the same as the control unit 58 with the exception that the control unit 158 controls the electric field application unit 154 and the thermometer 156 and that the control unit 158 controls the fourth electric field E4 applied by the electric field application unit 154 based on the temperature information obtained from the thermometer 156.

The fourth electric field heating device 150 applies the fourth electric field E4 to the second composite material 14" after the fourth electromagnetic wave shield 52 and the fourth metal nanocoil sheet 152 clearly separate the second composite material 14" into the second bonding region 14a" as a region heated by the fourth electric field E4 and the second non-bonding region 14b as a region not heated by the fourth electric field E4. Therefore, the second bonding region 14a" can be suitably placed in a semi-cured state. That is, the fourth electromagnetic wave shield 52 and the fourth metal nanocoil sheet 152 can suitably separate the second composite material 14" into a heated region and an unheated region.

As illustrated in FIG. 16, the fifth electric field heating device 160 includes a pressing unit 62, an electric field application unit 164, a thermometer 166, and a control unit 168. The fifth electric field heating device 160 applies a fifth electric field E5 with the electric field application unit 164 instead of emitting a fifth electromagnetic wave EB5 with the electromagnetic wave irradiation unit 64 in the fifth electromagnetic wave heating device 60. In addition, the process performed before the fifth electric field E5 is applied to the first composite material 12' and the second composite material 14' by the fifth electric field heating device 160 differs from the process performed before the first composite material 12' and the second composite material 14' are irradiated with the fifth electromagnetic wave EB5 by the fifth electromagnetic wave heating device 60. Specifically, the fifth electric field heating device 160 applies the fifth electric field E5 to the first composite material 12' and the second composite material 14', in which the first non-bonding region 12b and the second non-bonding region 14b are covered by the fifth electromagnetic wave shield 63 and a fifth metal nanocoil sheet 163 is attached to the first bonding region 12a' and the second bonding region 14a', so as to place the first bonding region 12a' and the second bonding region 14a' to which the fifth metal nanocoil sheet 163 is attached in the cured state by heating with the fifth electric field E5.

The pressing unit 62 of the fifth electric field heating device 160 is the same as the pressing unit 62 of the fifth electromagnetic wave heating device 60 with the exception that the pressing unit 62 is activated based on the control of the control unit 168.

The electric field application unit 164 applies the fifth electric field E5 based on the control of the control unit 168. The electric field application unit 164 preferably applies the fifth electric field E5 along a direction orthogonal to the direction along the horizontal plane in which the first bonding region 12a' and the second bonding region 14a' extend, that is, the Z-direction. When the electric field application unit 164 applies the fifth electric field E5 along a direction orthogonal to the direction along the horizontal plane in which the first bonding region 12a' and the second bonding region 14a' extend, the first bonding region 12a' and the second bonding region 14a' can be heated efficiently by the fifth electric field E5. The electric field application unit 164 may be a power supply and a pair of electrodes, but is not limited to this example, and a known electric field application unit may be suitably used.

The thermometer 166 operates based on the control of the control unit 168 and transmits temperature information to the control unit 168. The thermometer 166 is the same as the thermometer 66 with the exception that the thermometer 166 operates based on the control of the control unit 168 and transmits temperature information to the control unit 168. The control unit 168 controls the electric field application unit 164 and the thermometer 166. The control unit 168 controls the fifth electric field E5 applied by the electric field application unit 164 based on the temperature information obtained from the thermometer 166. The control unit 168 is the same as the control unit 68 with the exception that the control unit 168 controls the electric field application unit 164 and the thermometer 166 and that the control unit 168 controls the fifth electric field E5 applied by the electric field application unit 164 based on the temperature information obtained from the thermometer 166.

The fifth electric field heating device 160 applies the fifth electric field E5 to the first composite material 12' and the second composite material 14' after the fifth electromagnetic wave shield 63 and the fifth metal nanocoil sheet 163 clearly separate the first composite material 12' and the second composite material 14' into the first bonding region 12a' and the second bonding region 14a' as regions heated by the fifth electric field E5 and the first non-bonding region 12b and the second non-bonding region 14b as regions not heated by the fifth electric field E5. Therefore, the first bonding region 12a' and the second bonding region 14a' can be suitably placed in a cured state. That is, the fifth electromagnetic wave shield 63 and the fifth metal nanocoil sheet 163 can suitably separate the first composite material 12' and the second composite material 14' into a heated region and an unheated region.

The bonding method of the third embodiment, which is the effect of a bonding system including the first electric field heating device 120, the second electric field heating device 130, the third electric field heating device 140, the fourth electric field heating device 150, and the fifth electric field heating device 160 having such a configuration, will be described hereinafter.

In step S12 of the bonding method of the third embodiment, a first metal nanocoil sheet 122 is attached to the first non-bonding region 12b' in addition to the first bonding region 12a" being covered by the first electromagnetic wave shield 22 in the bonding method of the first embodiment. The first electromagnetic wave shield 22 and the first metal nanocoil sheet 122 can suitably separate the first composite material 12'" into a heated region and an unheated region. In step S14 of the bonding method of the third embodiment, a first electric field E1 is applied by the electric field application unit 124 of the first electric field heating device 120 instead of applying a first electromagnetic wave EB1 with the electromagnetic wave irradiation unit 24 of the first electromagnetic wave heating device 20 in the bonding method of the first embodiment.

In step S16 of the bonding method of the third embodiment, a second metal nanocoil sheet 132 is attached to the first bonding region 12a" in addition to the first non-bonding region 12b being covered by the second electromagnetic wave shield 32 in the bonding method of the first embodiment. The second electromagnetic wave shield 32 and the second metal nanocoil sheet 132 can suitably separate the first composite material 12" into a heated region and an unheated region. In step S18 of the bonding method of the third embodiment, a second electric field E2 is applied by the electric field application unit 134 of the second electric field heating device 130 instead of applying a second electromagnetic wave EB2 with the electromagnetic wave irradiation unit 34 of the second electromagnetic wave heating device 30 in the bonding method of the first embodiment.

In step S22 of the bonding method of the third embodiment, a third metal nanocoil sheet 142 is attached to the second non-bonding region 14b' in addition to the second bonding region 14a" being covered by the third electromagnetic wave shield 42 in the bonding method of the first embodiment. The third electromagnetic wave shield 42 and the third metal nanocoil sheet 142 can suitably separate the second composite material 14"' into a heated region and an unheated region. In step S24 of the bonding method of the third embodiment, a third electric field E3 is applied by the electric field application unit 144 of the third electric field heating device 140 instead of applying a third electromagnetic wave EB3 with the electromagnetic wave irradiation unit 44 of the third electromagnetic wave heating device 40 in the bonding method of the first embodiment.

In step S26 of the bonding method of the third embodiment, a fourth metal nanocoil sheet 152 is attached to the second bonding region 14a' in addition to the second non-bonding region 14b being covered by the fourth electromagnetic wave shield 52 in the bonding method of the first embodiment. The fourth electromagnetic wave shield 52 and the fourth metal nanocoil sheet 152 can suitably separate the second composite material 14" into a heated region and an unheated region. In step S28 of the bonding method of the third embodiment, a fourth electric field E4 is applied by the electric field application unit 154 of the fourth electric field heating device 150 instead of applying a fourth electromagnetic wave EB4 with the electromagnetic wave irradiation unit 54 of the fourth electromagnetic wave heating device 50 in the bonding method of the first embodiment.

In step S32 of the bonding method of the third embodiment, a fifth metal nanocoil sheet 163 is attached to the first bonding region 12a' and the second bonding region 14a' in addition to the first non-bonding region 12b and the second non-bonding region 14b being covered by the fifth electromagnetic wave shield 63 in the bonding method of the first embodiment. The fifth electromagnetic wave shield 63 and the fifth metal nanocoil sheet 163 can suitably separate the first composite material 12' and the second composite material 14' into a heated region and an unheated region. In step S34 of the bonding method of the third embodiment, a fifth electric field E5 is applied by the electric field application unit 164 of the fifth electric field heating device 160 instead of applying a fifth electromagnetic wave EB5 with the electromagnetic wave irradiation unit 64 of the fifth electromagnetic wave heating device 60 in the bonding method of the first embodiment.

The bonding method of the third embodiment is one in which, in the bonding method of the first embodiment, metal nanocoil treatment is added to the electromagnetic wave shield treatment in steps S12, S16, S22, S26, and S32, and the electromagnetic wave heat treatment in steps S14, S18, S24, S28, and S34 is changed to electric field heat treatment. Therefore, as in the bonding method of the first embodiment, regions to be bonded can be suitably placed in a semi-cured state, and the composite materials can be efficiently bonded together while the quality of the bonding strength of the composite materials is suitably maintained. As in the bonding method of the first embodiment, the bonding method of the third embodiment does not require preparation steps such as a lamination step, a debulking step, or a bagging step. In the bonding method of the third embodiment, as in the bonding method of the first embodiment, composite materials are bonded together via chemical bonds, and there are established quality control techniques for the bonded portions. Thus, there is no need for a secondary bonding step or a co-bonding step. As a result, as in the bonding method of the first embodiment, the bonding method of the third embodiment can dramatically reduce the production cost of the bonded material 10.

The bonding method of the third embodiment is one in which, in the bonding method of the first embodiment, electromagnetic wave shield treatment and metal nanocoil treatment are used in combination in steps S12, S16, S22, S26, and S32. Here, since the electric field required for the heat generation of the metal nanocoil is smaller than the electric field required for the heat generation of the carbon fibers, the composite material can be separated into a heated region and an unheated region with only a metal nanocoil. Therefore, in the bonding method of the third embodiment, metal nanocoil treatment alone may be used in steps S12, S16, S22, S26, and S32. In addition, in the bonding method of the third embodiment, as in the first embodiment, the composite material may be separated into a heated region and an unheated region using only electromagnetic wave shield treatment in steps S12, S16, S22, S26, and S32. Further, in the bonding method of the third embodiment, the composite material may be separated into a heated region and an unheated region by electromagnetic wave shield treatment in steps S12, S16, S22, S26, and S32 after a metal nanocoil sheet is attached to the front surfaces of the first composite material and the second composite material.

### Fourth Embodiment

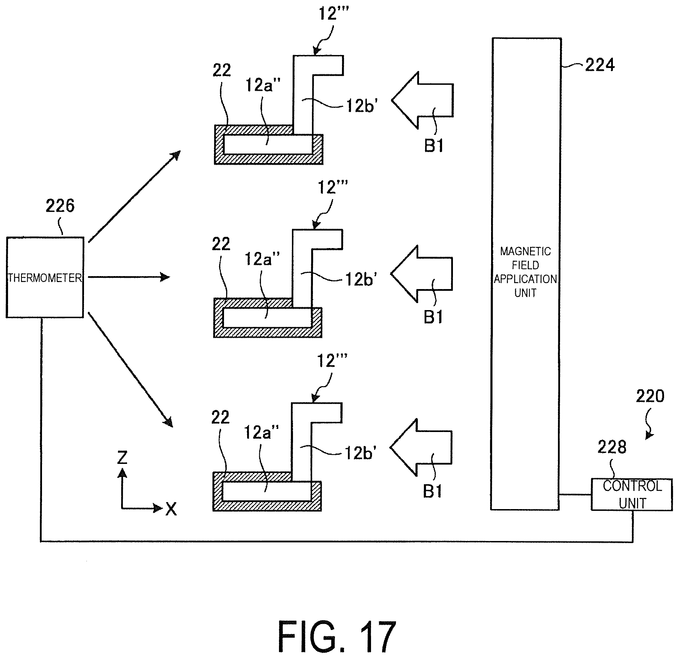

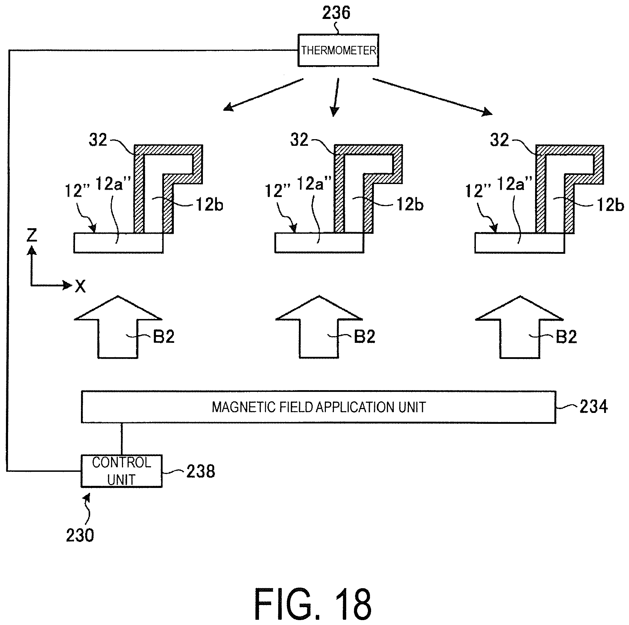

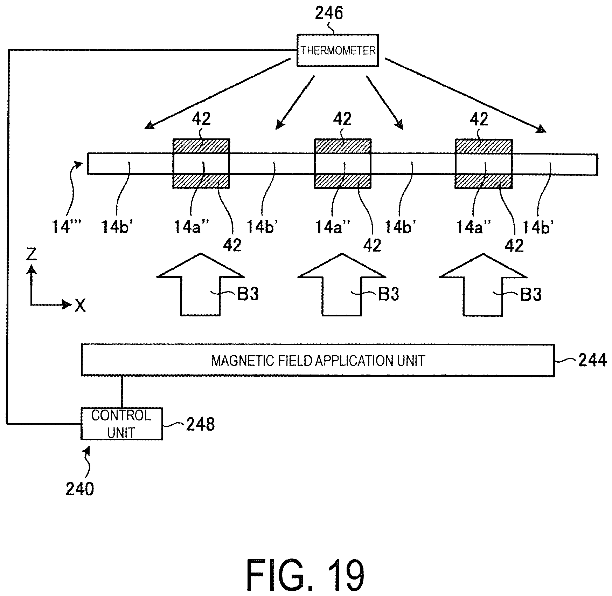

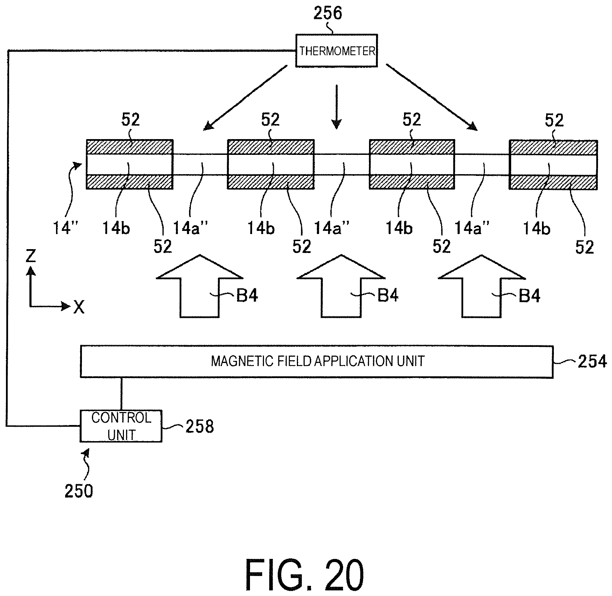

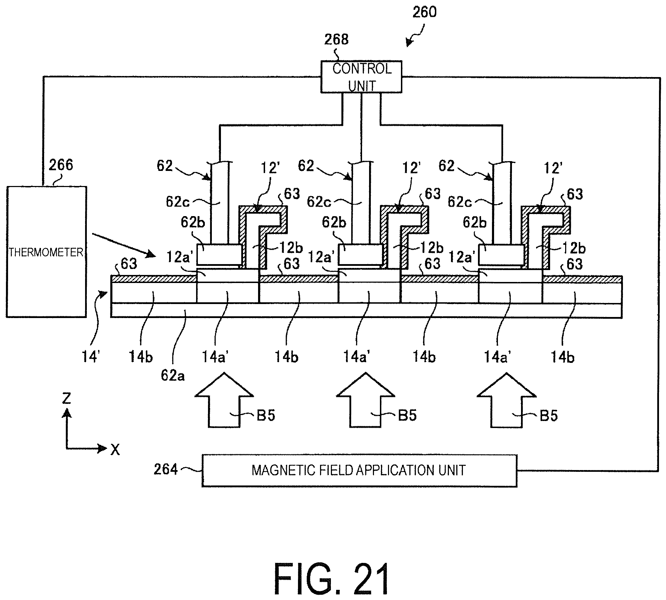

FIG. 17 is a schematic configuration diagram illustrating an example of a first magnetic field heating device 220 used in the bonding method of the fourth embodiment of the present invention. FIG. 18 is a schematic configuration diagram illustrating an example of a second magnetic field heating device 230 used in the bonding method of the fourth embodiment of the present invention. FIG. 19 is a schematic configuration diagram illustrating an example of a third magnetic field heating device 240 used in the bonding method of the fourth embodiment of the present invention. FIG. 20 is a schematic configuration diagram illustrating an example of a fourth magnetic field heating device 250 used in the bonding method of the fourth embodiment of the present invention. FIG. 21 is a schematic configuration diagram illustrating an example of a fifth magnetic field heating device 260 used in the bonding method of the fourth embodiment of the present invention. The bonding method of the fourth embodiment is one in which the electromagnetic wave heat treatment of steps S14, S18, S24, S28, and S34 is changed to magnetic field heat treatment in the bonding method of the first embodiment. In the description of the fourth embodiment, the same group of symbols as in the first embodiment will be used for configurations that are the same as in the first embodiment, and detailed descriptions thereof will be omitted.

As illustrated in FIG. 17, the first magnetic field heating device 220 includes a magnetic field application unit 224, a thermometer 226, and a control unit 228. The first magnetic field heating device 220 applies a first magnetic field B1 with the magnetic field application unit 224 instead of applying a first electromagnetic wave EB1 with the electromagnetic wave irradiation unit 24 in the first electromagnetic wave heating device 20. That is, the first magnetic field heating device 220 applies a first magnetic field B1 to the first composite material 12"', the first bonding region 12a" of which is covered by a first electromagnetic wave shield 22, so as to place the first non-bonding region 12b' exposed from the first electromagnetic wave shield 22 in the cured state by heating with the first magnetic field B1.

The magnetic field application unit 224 applies the first magnetic field B1 based on the control of the control unit 228. The magnetic field application unit 224 preferably applies the first magnetic field B1 along a direction orthogonal to the direction along the vertical plane in which the first non-bonding region 12b' extends, that is, the X-direction. When the magnetic field application unit 224 applies the first magnetic field B1 along a direction orthogonal to the direction along the vertical plane in which the first non-bonding region 12b' extends, the first non-bonding region 12b' can be heated efficiently by the first magnetic field B1. The magnetic field application unit 224 preferably applies a high-frequency magnetic field of at least 900 kHz. The magnetic field application unit 224 may be, for example, a coil, but is not limited to this example, and a known magnetic field application unit may be suitably used.

The thermometer 226 operates based on the control of the control unit 228 and transmits temperature information to the control unit 228. The thermometer 226 is the same as the thermometer 26 with the exception that the thermometer 226 operates based on the control of the control unit 228 and transmits temperature information to the control unit 228. The control unit 228 controls the magnetic field application unit 224 and the thermometer 226. The control unit 228 controls the first magnetic field B1 applied by the electric field application unit 224 based on the temperature information obtained from the thermometer 226. The control unit 228 is the same as the control unit 28 with the exception that the control unit 228 controls the magnetic field application unit 224 and the thermometer 226 and that the control unit 228 controls the first magnetic field B1 applied by the magnetic field application unit 224 based on the temperature information obtained from the thermometer 226.

As illustrated in FIG. 18, the second magnetic field heating device 230 includes a magnetic field application unit 234, a thermometer 236, and a control unit 238. The second magnetic field heating device 230 applies a second magnetic field B2 with the magnetic field application unit 234 instead of applying a second electromagnetic wave EB2 with the electromagnetic wave irradiation unit 34 in the second electromagnetic wave heating device 30. That is, the second magnetic field heating device 230 applies a second magnetic field B2 to the first composite material 12", the first non-bonding region 12b of which is covered by a second electromagnetic wave shield 32, so as to place the first bonding region 12a" exposed from the second electromagnetic wave shield 32 in the semi-cured state by heating with the second magnetic field B2.

The magnetic field application unit 234 applies the second magnetic field B2 based on the control of the control unit 238. The magnetic field application unit 234 preferably applies the second magnetic field B2 along a direction orthogonal to the direction along the horizontal plane in which the first bonding region 12a" extends, that is, the Z-direction. When the magnetic field application unit 234 applies the second magnetic field B2 along a direction orthogonal to the direction along the horizontal plane in which the first bonding region 12a" extends, the first bonding region 12a" can be heated efficiently by the second magnetic field B2. The magnetic field application unit 234 preferably applies a high-frequency magnetic field of at least 900 kHz. The magnetic field application unit 234 may be, for example, a coil, but is not limited to this example, and a known magnetic field application unit may be suitably used.

The thermometer 236 operates based on the control of the control unit 238 and transmits temperature information to the control unit 238. The thermometer 236 is the same as the thermometer 36 with the exception that the thermometer 236 operates based on the control of the control unit 238 and transmits temperature information to the control unit 238. The control unit 238 controls the magnetic field application unit 234 and the thermometer 236. The control unit 238 controls the second magnetic field B2 applied by the electric field application unit 234 based on the temperature information obtained from the thermometer 236. The control unit 238 is the same as the control unit 38 with the exception that the control unit 238 controls the magnetic field application unit 234 and the thermometer 236 and that the control unit 238 controls the second magnetic field B2 applied by the magnetic field application unit 234 based on the temperature information obtained from the thermometer 236.

As illustrated in FIG. 19, the third magnetic field heating device 240 includes a magnetic field application unit 244, a thermometer 246, and a control unit 248. The third magnetic field heating device 240 applies a third magnetic field B3 with the magnetic field application unit 244 instead of applying a third electromagnetic wave EB3 with the electromagnetic wave irradiation unit 44 in the third electromagnetic wave heating device 40. That is, the third magnetic field heating device 240 applies a third magnetic field B3 to the second composite material 14"', the second bonding region 14a" of which is covered by a third electromagnetic wave shield 42, so as to place the second non-bonding region 14b' exposed from the third electromagnetic wave shield 42 in the cured state by heating with the third magnetic field B3.

The magnetic field application unit 244 applies the third magnetic field B3 based on the control of the control unit 248. The magnetic field application unit 244 preferably applies the third magnetic field B3 along a direction orthogonal to the direction along the horizontal plane in which the second non-bonding region 14b' extends, that is, the Z-direction. When the magnetic field application unit 244 applies the third magnetic field B3 along a direction orthogonal to the direction along the horizontal plane in which the second non-bonding region 14b' extends, the second non-bonding region 14b' can be heated efficiently by the third magnetic field B3. The magnetic field application unit 244 preferably applies a high-frequency magnetic field of at least 900 kHz. The magnetic field application unit 244 may be, for example, a coil, but is not limited to this example, and a known magnetic field application unit may be suitably used.

The thermometer 246 operates based on the control of the control unit 248 and transmits temperature information to the control unit 248. The thermometer 246 is the same as the thermometer 46 with the exception that the thermometer 246 operates based on the control of the control unit 248 and transmits temperature information to the control unit 248. The control unit 248 controls the magnetic field application unit 244 and the thermometer 246. The control unit 248 controls the third magnetic field B3 applied by the electric field application unit 244 based on the temperature information obtained from the thermometer 246. The control unit 248 is the same as the control unit 48 with the exception that the control unit 248 controls the magnetic field application unit 244 and the thermometer 246 and that the control unit 248 controls the third magnetic field B3 applied by the magnetic field application unit 244 based on the temperature information obtained from the thermometer 246.

As illustrated in FIG. 20, the fourth magnetic field heating device 250 includes a magnetic field application unit 254, a thermometer 256, and a control unit 258. The fourth magnetic field heating device 250 applies a fourth magnetic field B4 with the magnetic field application unit 254 instead of applying a fourth electromagnetic wave EB4 with the electromagnetic wave irradiation unit 54 in the fourth electromagnetic wave heating device 50. That is, the fourth magnetic field heating device 250 applies a fourth magnetic field B4 to the second composite material 14", the second non-bonding region 14b of which is covered by a fourth electromagnetic wave shield 52, so as to place the second bonding region 14a" exposed from the fourth electromagnetic wave shield 52 in the semi-cured state by heating with the fourth magnetic field B4.

The magnetic field application unit 254 applies the fourth magnetic field B4 based on the control of the control unit 258. The magnetic field application unit 254 preferably applies the fourth magnetic field B4 along a direction orthogonal to the direction along the horizontal plane in which the second bonding region 14a" extends, that is, the Z-direction. When the magnetic field application unit 254 applies the fourth magnetic field B4 along a direction orthogonal to the direction along the horizontal plane in which the second bonding region 14a" extends, the second bonding region 14a" can be heated efficiently by the fourth magnetic field B4. The magnetic field application unit 254 preferably applies a high-frequency magnetic field of at least 900 kHz. The magnetic field application unit 254 may be, for example, a coil, but is not limited to this example, and a known magnetic field application unit may be suitably used.

The thermometer 256 operates based on the control of the control unit 258 and transmits temperature information to the control unit 258. The thermometer 256 is the same as the thermometer 56 with the exception that the thermometer 256 operates based on the control of the control unit 258 and transmits temperature information to the control unit 258. The control unit 258 controls the magnetic field application unit 254 and the thermometer 256. The control unit 258 controls the fourth magnetic field B4 applied by the electric field application unit 254 based on the temperature information obtained from the thermometer 256. The control unit 258 is the same as the control unit 58 with the exception that the control unit 258 controls the magnetic field application unit 254 and the thermometer 256 and that the control unit 258 controls the fourth magnetic field B4 applied by the magnetic field application unit 254 based on the temperature information obtained from the thermometer 256.

As illustrated in FIG. 21, the fifth magnetic field heating device 260 includes a pressing unit 62, a magnetic field application unit 264, a thermometer 266, and a control unit 268. The fifth magnetic field heating device 260 applies a fifth magnetic field B5 with the magnetic field application unit 264 instead of applying a fifth electromagnetic wave EB5 with the electromagnetic wave irradiation unit 64 in the fifth electromagnetic wave heating device 60. That is, the fifth magnetic field heating device 260 applies a fifth magnetic field B5 to the first composite material 12' and the second composite material 14', the first non-bonding region 12b and the second non-bonding region 14b of which are covered by a fifth electromagnetic wave shield 63, so as to place the first bonding region 12a' and the second bonding region 14a' exposed from the fifth electromagnetic wave shield 63 in the cured state by heating with the fifth magnetic field B5.

The pressing unit 62 of the fifth magnetic field heating device 260 is the same as the pressing unit 62 of the fifth electromagnetic wave heating device 60 with the exception that the pressing unit 62 is activated based on the control of the control unit 268.

The magnetic field application unit 264 applies the fifth magnetic field B5 based on the control of the control unit 268. The magnetic field application unit 264 preferably applies the fifth magnetic field B5 along a direction orthogonal to the direction along the horizontal plane in which the first bonding region 12a' and the second bonding region 14a' extend, that is, the Z-direction. When the magnetic field application unit 264 applies the fifth magnetic field B5 along a direction orthogonal to the direction along the horizontal plane in which the first bonding region 12a' and the second bonding region 14a' extend, the first bonding region 12a' and the second bonding region 14a' can be heated efficiently by the fifth magnetic field B5. The magnetic field application unit 264 preferably applies a high-frequency magnetic field of at least 900 kHz. The magnetic field application unit 264 may be, for example, a coil, but is not limited to this example, and a known magnetic field application unit may be suitably used.

The thermometer 266 operates based on the control of the control unit 268 and transmits temperature information to the control unit 268. The thermometer 266 is the same as the thermometer 66 with the exception that the thermometer 266 operates based on the control of the control unit 268 and transmits temperature information to the control unit 268. The control unit 268 controls the magnetic field application unit 264 and the thermometer 266. The control unit 268 controls the fourth magnetic field B4 applied by the electric field application unit 264 based on the temperature information obtained from the thermometer 266. The control unit 268 is the same as the control unit 68 with the exception that the control unit 268 controls the magnetic field application unit 264 and the thermometer 266 and that the control unit 268 controls the fourth magnetic field B4 applied by the magnetic field application unit 264 based on the temperature information obtained from the thermometer 266.

The bonding method of the fourth embodiment, which is the effect of a bonding system including the first magnetic field heating device 220, the second magnetic field heating device 230, the third magnetic field heating device 240, the fourth magnetic field heating device 250, and the fifth magnetic field heating device 260 having such a configuration, will be described hereinafter.

In step S14 of the bonding method of the fourth embodiment, a first magnetic field B1 is applied by the magnetic field application unit 224 of the first magnetic field heating device 220 instead of applying a first electromagnetic wave EB1 with the electromagnetic wave irradiation unit 24 of the first electromagnetic wave heating device 20 in the bonding method of the first embodiment. In step S 18 of the bonding method of the fourth embodiment, a second magnetic field B2 is applied by the magnetic field application unit 234 of the second magnetic field heating device 230 instead of applying a second electromagnetic wave EB2 with the electromagnetic wave irradiation unit 34 of the second electromagnetic wave heating device 30 in the bonding method of the first embodiment.

In step S24 of the bonding method of the fourth embodiment, a third magnetic field B3 is applied by the magnetic field application unit 244 of the third magnetic field heating device 240 instead of applying a third electromagnetic wave EB3 with the electromagnetic wave irradiation unit 44 of the third electromagnetic wave heating device 40 in the bonding method of the first embodiment. In step S28 of the bonding method of the fourth embodiment, a fourth magnetic field B4 is applied by the magnetic field application unit 254 of the fourth magnetic field heating device 250 instead of applying a fourth electromagnetic wave EB4 with the electromagnetic wave irradiation unit 54 of the fourth electromagnetic wave heating device 50 in the bonding method of the first embodiment.

In step S34 of the bonding method of the fourth embodiment, a fifth magnetic field B5 is applied by the magnetic field application unit 264 of the fifth magnetic field heating device 260 instead of applying a fifth electromagnetic wave EB5 with the electromagnetic wave irradiation unit 64 of the fifth electromagnetic wave heating device 60 in the bonding method of the first embodiment.

The bonding method of the fourth embodiment is one in which the electromagnetic wave heat treatment of steps S14, S18, S24, S28, and S34 is changed to magnetic field heat treatment in the bonding method of the first embodiment. Therefore, with the bonding method of the fourth embodiment, as in the bonding method of the first embodiment, regions to be bonded can be suitably placed in a semi-cured state, and the composite materials can be efficiently bonded together while the quality of the bonding strength of the composite materials is suitably maintained. As in the bonding method of the first embodiment, the bonding method of the fourth embodiment does not require preparation steps such as a lamination step, a debulking step, or a bagging step. In the bonding method of the fourth embodiment, as in the bonding method of the first embodiment, composite materials are bonded together via chemical bonds, and there are established quality control techniques for the bonded portions. Thus, there is no need for a secondary bonding step or a co-bonding step. As a result, as in the bonding method of the first embodiment, the bonding method of the fourth embodiment can dramatically reduce the production cost of the bonded material 10.

The preferable direction to apply the magnetic field in the bonding method of the fourth embodiment is orthogonal to the preferable direction to apply the electric field in the bonding method of the third embodiment. Therefore, electric field heat treatment and magnetic field heat treatment can be suitably combined by selecting electric field heat treatment under conditions in which the application of an electric field is preferable and selecting magnetic field heat treatment under conditions in which the application of a magnetic field is preferable in accordance with the shape of the first composite material 12 or the second composite material 14. For example, electric field heat treatment may be selected in step S14, and magnetic field heat treatment may be selected in steps S18, S24, S28, and S34.

### Fifth Embodiment

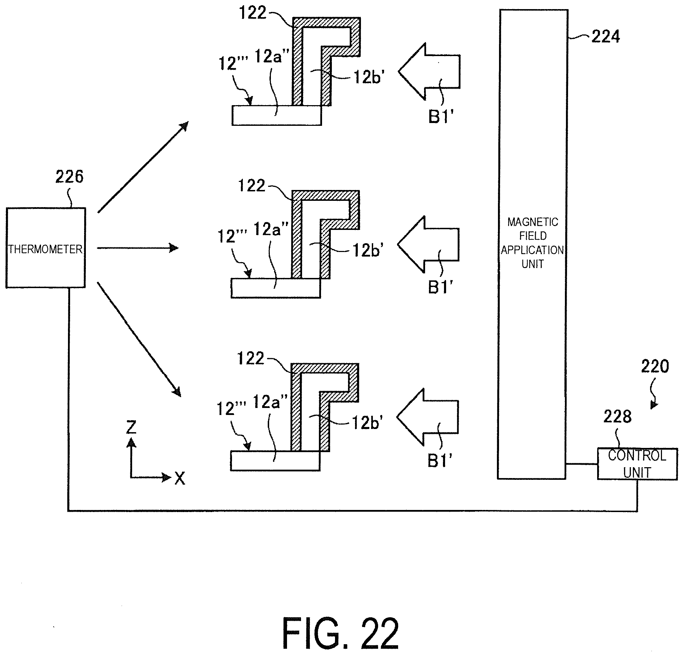

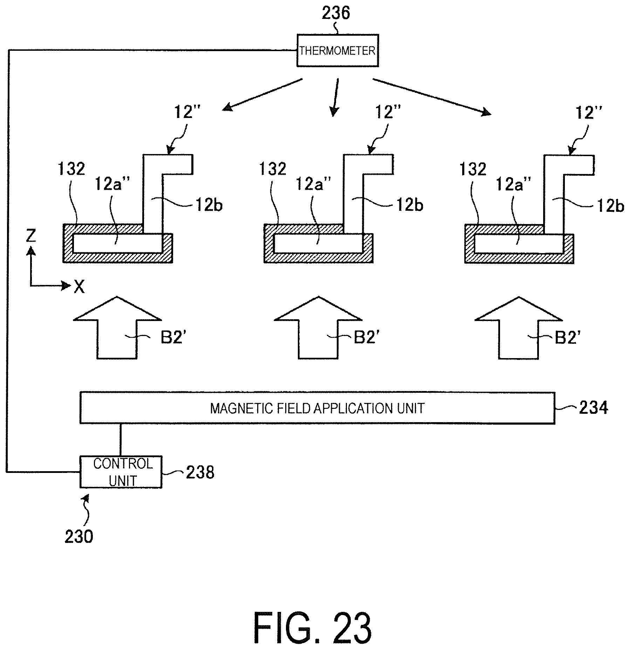

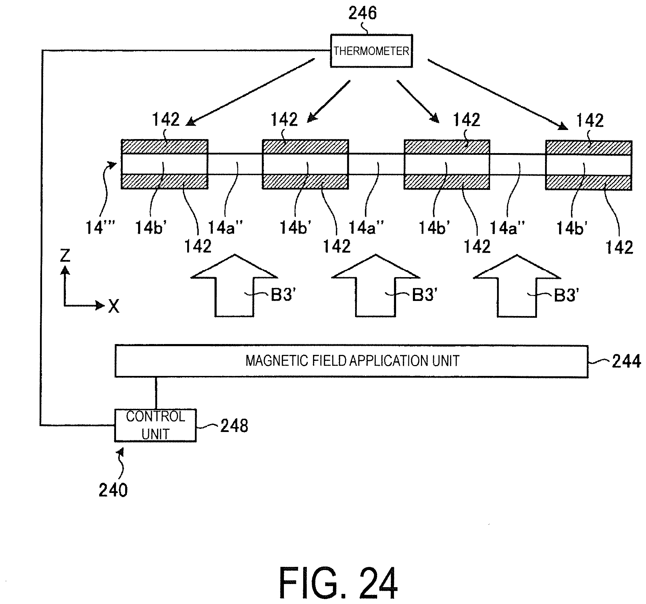

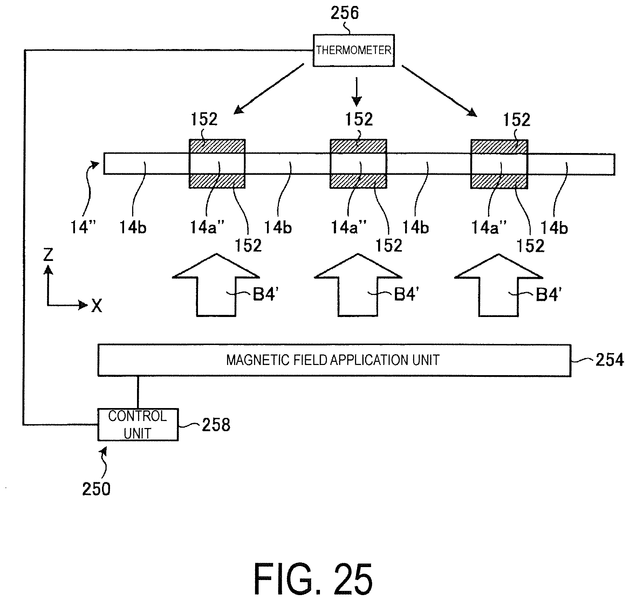

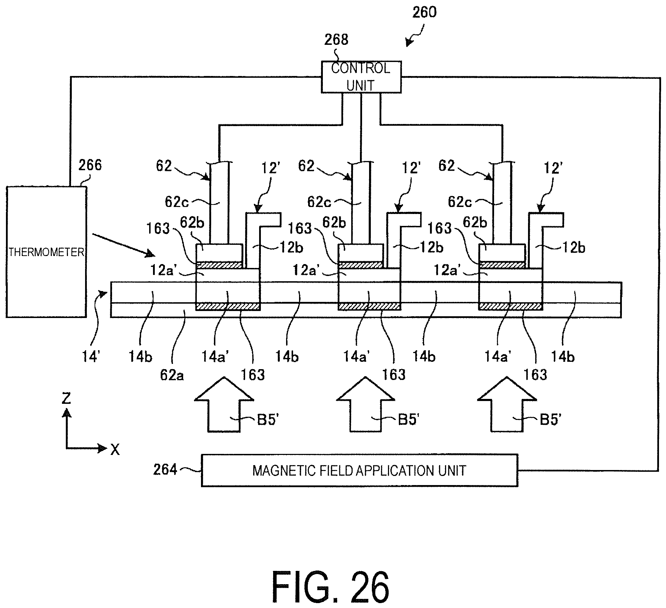

FIG. 22 is a schematic configuration diagram illustrating an example of a first magnetic field heating device 220 used in the bonding method of the fifth embodiment of the present invention. FIG. 23 is a schematic configuration diagram illustrating an example of a second magnetic field heating device 230 used in the bonding method of the fifth embodiment of the present invention. FIG. 24 is a schematic configuration diagram illustrating an example of a third magnetic field heating device 240 used in the bonding method of the fifth embodiment of the present invention. FIG. 25 is a schematic configuration diagram illustrating an example of a fourth magnetic field heating device 250 used in the bonding method of the fifth embodiment of the present invention. FIG. 26 is a schematic configuration diagram illustrating an example of a fifth magnetic field heating device 260 used in the bonding method of the fifth embodiment of the present invention. The bonding method of the fifth embodiment is one in which, in the bonding method of the fourth embodiment, the magnetic field shield treatment in steps S12, S16, S22, S26, and S32 is changed to metal nanocoil treatment, and the strength of the magnetic field in the magnetic field heat treatment of steps S14, S18, S24, S28, and S34 is changed. In the description of the fifth embodiment, the same group of symbols as in the second embodiment will be used for configurations that are the same as in the second embodiment, and detailed descriptions thereof will be omitted.

The first magnetic field heating device 220 used in the bonding method of the fifth embodiment has the same configuration as the first magnetic field heating device 220 used in the bonding method of the fourth embodiment. As illustrated in FIG. 22, the first magnetic field heating device 220 used in the bonding method of the fifth embodiment differs from the first magnetic field heating device 220 used in the bonding method of the fourth embodiment in that the strength of the magnetic field applied to the first composite material 12'" differs. The first magnetic field heating device 220 used in the bonding method of the fifth embodiment applies a first magnetic field B1' which is weaker than the first magnetic field B1 applied by the first magnetic field heating device 220 used in the bonding method of the fourth embodiment. The first magnetic field heating device 220 used in the bonding method of the fifth embodiment controls the strength of the first magnetic field B1' with the control unit 228.

In addition, the first magnetic field heating device 220 used in the bonding method of the fifth embodiment differs from the first magnetic field heating device 220 used in the bonding method of the fourth embodiment in that the process performed before the first magnetic field B1' is applied to the first composite material 12'" differs. Specifically, the first magnetic field heating device 220 used in the bonding method of the fifth embodiment applies the first magnetic field B1' to the first composite material 12'", in which a first metal nanocoil sheet 122 is attached to the first non-bonding region 12b', so as to place the first non-bonding region 12b' to which the first metal nanocoil sheet 122 is attached in the cured state by heating with the first magnetic field B1'.

Since a first magnetic field B1' which is weaker than the first magnetic field B1 is applied by the first magnetic field heating device 220 to the exposed first bonding region 12a" in the first composite material 12"', the first bonding region 12a" is maintained in the softened state without being substantially heated or subjected to heat curing treatment. Since a first magnetic field B1' is applied by the first magnetic field heating device 220 to the first non-bonding region 12b' to which the first metal nanocoil sheet 122 is attached in the first composite material 12"', the first non-bonding region 12b' assumes the cured state when subjected to heat curing treatment in response to the heat generation of the metal nanocoil.

The first magnetic field heating device 220 used in the bonding method of the fifth embodiment applies the first magnetic field B1' to the first composite material 12"' after the first metal nanocoil sheet 122 clearly separates the first composite material 12"'into the first non-bonding region 12b' as a region heated by the first magnetic field B1' and the first bonding region 12a" as a region not heated by the first magnetic field B1'. Therefore, the first bonding region 12a" can be suitably maintained in the softened state, and thus the first bonding region 12a" can be suitably placed in the semi-cured state in a subsequent process. That is, as in the case of the first electromagnetic wave shield 22, the first metal nanocoil sheet 122 can suitably separate the first composite material 12'" into a heated region and an unheated region.

The second magnetic field heating device 230 used in the bonding method of the fifth embodiment has the same configuration as the second magnetic field heating device 230 used in the bonding method of the fourth embodiment. As illustrated in FIG. 23, the second magnetic field heating device 230 used in the bonding method of the fifth embodiment differs from the second magnetic field heating device 230 used in the bonding method of the fourth embodiment in that the strength of the magnetic field applied to the first composite material 12" differs. The second magnetic field heating device 230 used in the bonding method of the fifth embodiment applies a second magnetic field B2' which is weaker than the second magnetic field B2 applied by the second magnetic field heating device 230 used in the bonding method of the fourth embodiment. The second magnetic field heating device 230 used in the bonding method of the fifth embodiment controls the strength of the second magnetic field B2' with the control unit 238.

In addition, the second magnetic field heating device 230 used in the bonding method of the fifth embodiment differs from the second magnetic field heating device 230 used in the bonding method of the fourth embodiment in that the process performed before the second magnetic field B2' is applied to the first composite material 12" differs. Specifically, the second magnetic field heating device 230 used in the bonding method of the fifth embodiment applies the second magnetic field B2' to the first composite material 12", in which a second metal nanocoil sheet 132 is attached to the first bonding region 12a", so as to place the first bonding region 12a' to which the second metal nanocoil sheet 132 is attached in the semi-cured state by heating with the second magnetic field B2'.

Since a second magnetic field B2' which is weaker than the second magnetic field B2 is applied by the second magnetic field heating device 230 to the exposed first non-bonding region 12b in the first composite material 12", the first non-bonding region 12b is not substantially heated. Since a second magnetic field B2' is applied by the second magnetic field heating device 230 to the first bonding region 12a" to which the second metal nanocoil sheet 132 is attached in the first composite material 12", the first bonding region 12a" assumes the semi-cured state when subjected to heat curing treatment in response to the heat generation of the metal nanocoil.

The second magnetic field heating device 230 used in the bonding method of the fifth embodiment applies the second magnetic field B2' to the first composite material 12" after the second metal nanocoil sheet 132 clearly separates the first composite material 12" into the first bonding region 12a" as a region heated by the second magnetic field B2' and the first non-bonding region 12b as a region not heated by the second magnetic field B2'. Therefore, the first bonding region 12a" can be suitably placed in a semi-cured state. That is, as in the case of the second electromagnetic wave shield 32, the second metal nanocoil sheet 132 can suitably separate the first composite material 12" into a heated region and an unheated region.

The third magnetic field heating device 240 used in the bonding method of the fifth embodiment has the same configuration as the third magnetic field heating device 240 used in the bonding method of the fourth embodiment. As illustrated in FIG. 24, the third magnetic field heating device 240 used in the bonding method of the fifth embodiment differs from the third magnetic field heating device 240 used in the bonding method of the fourth embodiment in that the strength of the magnetic field applied to the second composite material 14'" differs. The third magnetic field heating device 240 used in the bonding method of the fifth embodiment applies a third magnetic field B3' which is weaker than the third magnetic field B3 applied by the third magnetic field heating device 240 used in the bonding method of the fourth embodiment. The third magnetic field heating device 240 used in the bonding method of the fifth embodiment controls the strength of the third magnetic field B3' with the control unit 248.

In addition, the third magnetic field heating device 240 used in the bonding method of the fifth embodiment differs from the third magnetic field heating device 240 used in the bonding method of the fourth embodiment in that the process performed before the third magnetic field B3' is applied to the second composite material 14"' differs. Specifically, the third magnetic field heating device 240 used in the bonding method of the fifth embodiment applies the third magnetic field B3' to the second composite material 14"', in which a third metal nanocoil sheet 142 is attached to the second non-bonding region 14b', so as to place the second non-bonding region 14b' to which the third metal nanocoil sheet 142 is attached in the cured state by heating with the third magnetic field B3'.

Since a third magnetic field B3' which is weaker than the third magnetic field B3 is applied by the third magnetic field heating device 240 to the exposed second bonding region 14a" in the first composite material 14"', the second bonding region 14a" is maintained in the softened state without being substantially heated or subjected to heat curing treatment. Since a third magnetic field B3' is applied by the third magnetic field heating device 240 to the second non-bonding region 14b' to which the third metal nanocoil sheet 142 is attached in the first composite material 14'", the second non-bonding region 14b' assumes the cured state when subjected to heat curing treatment in response to the heat generation of the metal nanocoil.

The third magnetic field heating device 240 used in the bonding method of the fifth embodiment applies the third magnetic field B3' to the second composite material 14'" after the third metal nanocoil sheet 142 clearly separates the second composite material 14'" into the second non-bonding region 14b' as a region heated by the third magnetic field B3' and the second bonding region 14a" as a region not heated by the third magnetic field B3'. Therefore, the second bonding region 14a" can be suitably maintained in the softened state, and thus the second bonding region 14a" can be suitably placed in the semi-cured state in a subsequent process. That is, as in the case of the third electromagnetic wave shield 42, the third metal nanocoil sheet 142 can suitably separate the second composite material 14'" into a heated region and an unheated region.

The fourth magnetic field heating device 250 used in the bonding method of the fifth embodiment has the same configuration as the fourth magnetic field heating device 250 used in the bonding method of the fourth embodiment. As illustrated in FIG. 25, the fourth magnetic field heating device 250 used in the bonding method of the fifth embodiment differs from the fourth magnetic field heating device 250 used in the bonding method of the fourth embodiment in that the strength of the magnetic field applied to the second composite material 14" differs. The fourth magnetic field heating device 250 used in the bonding method of the fifth embodiment applies a fourth magnetic field B4' which is weaker than the fourth magnetic field B4 applied by the fourth magnetic field heating device 250 used in the bonding method of the fourth embodiment. The fourth magnetic field heating device 250 used in the bonding method of the fifth embodiment controls the strength of the fourth magnetic field B4' with the control unit 258.

In addition, the fourth magnetic field heating device 250 used in the bonding method of the fifth embodiment differs from the fourth magnetic field heating device 250 used in the bonding method of the fourth embodiment in that the process performed before the fourth magnetic field B4' is applied to the second composite material 14" differs. Specifically, the fourth magnetic field heating device 250 used in the bonding method of the fifth embodiment applies the fourth magnetic field B4' to the second composite material 14", in which a fourth metal nanocoil sheet 152 is attached to the second bonding region 14a", so as to place the second bonding region 14a" to which the fourth metal nanocoil sheet 152 is attached in the semi-cured state by heating with the fourth magnetic field B4'.

Since a fourth magnetic field B4' which is weaker than the fourth magnetic field B4 is applied by the fourth magnetic field heating device 250 to the exposed second non-bonding region 14b in the second composite material 14", the second non-bonding region 14b is not substantially heated. Since a fourth magnetic field B4' is applied by the fourth magnetic field heating device 250 to the second bonding region 14a" to which the fourth metal nanocoil sheet 152 is attached in the first composite material 14", the second bonding region 14a" assumes the semi-cured state when subjected to heat curing treatment in response to the heat generation of the metal nanocoil.

The fourth magnetic field heating device 250 used in the bonding method of the fifth embodiment applies the fourth magnetic field B4' to the second composite material 14" after the fourth metal nanocoil sheet 152 clearly separates the second composite material 14" into the second bonding region 14a" as a region heated by the fourth magnetic field B4' and the second non-bonding region 14b as a region not heated by the fourth magnetic field B4'. Therefore, the second bonding region 14a" can be suitably placed in a semi-cured state. That is, as in the case of the fourth electromagnetic wave shield 52, the fourth metal nanocoil sheet 152 can suitably separate the second composite material 14" into a heated region and an unheated region.

The fifth magnetic field heating device 260 used in the bonding method of the fifth embodiment has the same configuration as the fifth magnetic field heating device 260 used in the bonding method of the fourth embodiment. As illustrated in FIG. 26, the fifth magnetic field heating device 260 used in the bonding method of the fifth embodiment differs from the fifth magnetic field heating device 260 used in the bonding method of the fourth embodiment in that the strength of the magnetic field applied to the first composite material 12' and the second composite material 14' differs. The fifth magnetic field heating device 260 used in the bonding method of the fifth embodiment applies a fifth magnetic field B5' which is weaker than the fifth magnetic field B5 applied by the fifth magnetic field heating device 260 used in the bonding method of the fourth embodiment. The fifth magnetic field heating device 260 used in the bonding method of the fifth embodiment controls the strength of the fifth magnetic field B5' with the control unit 268.

In addition, the fifth magnetic field heating device 260 used in the bonding method of the fifth embodiment differs from the fifth magnetic field heating device 260 used in the bonding method of the fourth embodiment in that the process performed before the fifth magnetic field B5' is applied to the first composite material 12' and the second composite material 14' differs. Specifically, the fifth magnetic field heating device 260 used in the bonding method of the fifth embodiment applies the fifth magnetic field B5' to the first composite material 12' and the second composite material 14', in which a fifth metal nanocoil sheet 163 is attached to the first bonding region 12a' and the second bonding region 14a', so as to place the first bonding region 12a' and the second bonding region 14a' to which the fifth metal nanocoil sheet 163 is attached in the cured state by heating with the fifth magnetic field B5'.

Since a fifth magnetic field B5' which is weaker than the fifth magnetic field B5 is applied by the fifth magnetic field heating device 260 to the exposed first non-bonding region 12b and second non-bonding region 14b in the first composite material 12' and the second composite material 14', the first non-bonding region 12b and the second non-bonding region 14b are not substantially heated. Since a fifth magnetic field B5' is applied by the fifth magnetic field heating device 260 to the first bonding region 12a' and the second bonding region 14a' to which the fifth metal nanocoil sheet 163 is attached in the first composite material 12' and the second composite material 14', the first bonding region 12a' and the second bonding region 14a' assume the cured state when subjected to heat curing treatment in response to the heat generation of the metal nanocoil.

The fifth magnetic field heating device 260 used in the bonding method of the fifth embodiment applies the fifth magnetic field B5' to the first composite material 12' and the second composite material 14' after the fifth metal nanocoil sheet 163 clearly separates the first composite material 12' and the second composite material 14' into the first bonding region 12a' and the second bonding region 14a' as regions heated by the fifth magnetic field B5' and the first non-bonding region 12b and the second non-bonding region 14b as regions not heated by the fifth magnetic field B5'. Therefore, the first bonding region 12a' and the second bonding region 14a' can be suitably placed in a cured state. That is, as in the case of the fifth electromagnetic wave shield 63, the fifth metal nanocoil sheet 163 can suitably separate the first composite material 12' and the second composite material 14' into a heated region and an unheated region.

The bonding method of the fifth embodiment, which is the effect of a bonding system including the first magnetic field heating device 220, the second magnetic field heating device 230, the third magnetic field heating device 240, the fourth magnetic field heating device 250, and the fifth magnetic field heating device 260 having such a configuration, will be described hereinafter.

In step S12 of the bonding method of the fifth embodiment, a first metal nanocoil sheet 122 is attached to the first non-bonding region 12b' instead of covering the first bonding region 12a" with the first electromagnetic wave shield 22 in the bonding method of the fourth embodiment. The first metal nanocoil sheet 122 can suitably separate the first composite material 12'" into a heated region and an unheated region. In step S14 of the bonding method of the fifth embodiment, a first magnetic field B1' is applied instead of applying a first magnetic field B1 in the bonding method of the fourth embodiment.

In step S16 of the bonding method of the fifth embodiment, a second metal nanocoil sheet 132 is attached to the first bonding region 12a" instead of covering the first non-bonding region 12b with the second electromagnetic wave shield 32 in the bonding method of the fourth embodiment. The second metal nanocoil sheet 132 can suitably separate the first composite material 12" into a heated region and an unheated region. In step S 18 of the bonding method of the fifth embodiment, a second magnetic field B2' is applied instead of applying a second magnetic field B2 in the bonding method of the fourth embodiment.

In step S22 of the bonding method of the fifth embodiment, a third metal nanocoil sheet 142 is attached to the second non-bonding region 14b' instead of covering the second bonding region 14a" with the third electromagnetic wave shield 42 in the bonding method of the fourth embodiment. The third metal nanocoil sheet 142 can suitably separate the second composite material 14'" into a heated region and an unheated region. In step S24 of the bonding method of the fifth embodiment, a third magnetic field B3' is applied instead of applying a third magnetic field B3 in the bonding method of the fourth embodiment.

In step S26 of the bonding method of the fifth embodiment, a fourth metal nanocoil sheet 152 is attached to the second bonding region 14a" instead of covering the second non-bonding region 14b with the fourth electromagnetic wave shield 52 in the bonding method of the fourth embodiment. The fourth metal nanocoil sheet 152 can suitably separate the second composite material 14" into a heated region and an unheated region. In step S28 of the bonding method of the fifth embodiment, a fourth magnetic field B4' is applied instead of applying a fourth magnetic field B4 in the bonding method of the fourth embodiment.

In step S32 of the bonding method of the fifth embodiment, a fifth metal nanocoil sheet 163 is attached to the first bonding region 12a' and the second bonding region 14a' instead of covering the first non-bonding region 12b and the second non-bonding region 14b with the fifth electromagnetic wave shield 63 in the bonding method of the fourth embodiment. The fifth metal nanocoil sheet 163 can suitably separate the first composite material 12' and the second composite material 14' into a heated region and an unheated region. In step S34 of the bonding method of the fifth embodiment, a fifth magnetic field B5' is applied instead of applying a fifth magnetic field B5 in the bonding method of the fourth embodiment.

The bonding method of the fifth embodiment is one in which, in the bonding method of the fourth embodiment, the magnetic field shield treatment in steps S12, S16, S22, S26, and S32 is changed to metal nanocoil treatment, and the strength of the magnetic field in the magnetic field heat treatment of steps S14, S18, S24, S28, and S34 is changed. Therefore, as in the bonding method of the fourth embodiment, regions to be bonded can be suitably placed in a semi-cured state, and the composite materials can be efficiently bonded together while the quality of the bonding strength of the composite materials is suitably maintained. As in the bonding method of the fourth embodiment, the bonding method of the fifth embodiment does not require preparation steps such as a lamination step, a debulking step, or a bagging step. In the bonding method of the fifth embodiment, as in the bonding method of the fourth embodiment, composite materials are bonded together via chemical bonds, and there are established quality control techniques for the bonded portions. Thus, there is no need for a secondary bonding step or a co-bonding step. As a result, as in the bonding method of the fourth embodiment, the bonding method of the fifth embodiment can dramatically reduce the production cost of the bonded material 10.

The metal nanocoil sheet used in the bonding method of the fifth embodiment and the electromagnetic wave shield used in the bonding method of the fourth embodiment may also be used in combination. For example, after a metal nanocoil sheet is attached to the entire surfaces of the first composite material and the second composite material to enable magnetic field heat treatment using a magnetic field of low strength, the regions to be subjected to magnetic field heat treatment may be separated by covering the outer periphery of the attached metal nanocoil sheet with an electromagnetic wave shield.

### Reference Sign List

10 Bonded material
12, 12', 12", 12'" First composite material
12a, 12a', 12a" First bonding region
12b, 12b' First non-bonding region
12f First carbon fibers
14, 14', 14", 14": Second composite material
14a, 14a', 14a" Second bonding region
14b, 14b' Second non-bonding region
14f Second carbon fibers
20 First electromagnetic wave heating device
22 First electromagnetic wave shield
24, 34, 44, 54, 64 Electromagnetic wave irradiation unit
26, 36, 46, 56, 66, 126, 136, 146, 156, 166, 226, 236, 246, 256, 266 Thermometer
28, 38, 48, 58, 68, 128, 138, 148, 158, 168, 228, 238, 248, 258, 268 Control unit
30 Second electromagnetic wave heating device
32 Second electromagnetic wave shield
40 Third electromagnetic wave heating device
42 Third electromagnetic wave shield
50 Fourth electromagnetic wave heating device
52 Fourth electromagnetic wave shield
60 Fifth electromagnetic wave heating device
62 Pressing unit
62a Pressing support unit
62b Pressure adding unit
62c Pressing cylinder
63 Fifth electromagnetic wave shield
120 First electric field heating device
122 First metal nanocoil sheet
124, 134, 144, 154, 164 Electric field application unit
130 Second electric field heating device
132 Second metal nanocoil sheet
140 Third electric field heating device
142 Third metal nanocoil sheet
150 Fourth electric field heating device
152 Fourth metal nanocoil sheet
160 Fifth electric field heating device
163 Fifth metal nanocoil sheet
220: First magnetic field heating device
224, 234, 244, 254, 264 Magnetic field application unit
230 Second magnetic field heating device
240 Third magnetic field heating device
250 Fourth magnetic field heating device
260 Fifth magnetic field heating device
B1, B1' First magnetic field
B2, B2' Second magnetic field
B3, B3' Third magnetic field
B4, B4' Fourth magnetic field
B5, B5' Fifth magnetic field
E1 First electric field
E2 Second electric field
E3 Third electric field
E4 Fourth electric field
E5 Fifth electric field
EB1 First electromagnetic wave
EB2 Second electromagnetic wave
EB3 Third electromagnetic wave
EB4 Fourth electromagnetic wave
EB5 Fifth electromagnetic wave
T1 Curing temperature range
T2 Semi-curing temperature range

## Claims

1. A method for bonding composite materials together, wherein a first composite material (12, 12', 12'', 12''') and a second composite material (14, 14', 14", 14''') prepared by impregnating reinforced fibers with thermosetting resins are bonded together by heating to heat-cure the first and second composite materials (12, 12', 12", 12"', 14, 14', 14'', 14"'), and
at least prescribed regions of the first and second composite materials (12, 12', 12", 12"', 14, 14', 14'', 14''') assume a softened state, which is a state before the thermosetting resins are heat-cured, a cured state, which is a state after the thermosetting resins are heat-cured, or a semi-cured state, which is a state between the softened state and the cured state;
the method comprising:
a first curing preparation step (S12), wherein a first bonding region of the first composite material (12, 12', 12'', 12''') to be bonded to the second composite material (14, 14', 14", 14''') is prepared to be maintained in a softened state;
a first curing step (S14) performed after the first curing preparation step (S12), wherein a first non-bonding region (12b, 12b'), which is a region other than the first bonding region (12a, 12a', 12a''), is placed in the cured state by heating;
a first semi-curing preparation step (S16), wherein the first bonding region (12a, 12a', 12a") is placed in a heatable state;
a first semi-curing step (S18) performed after the first semi-curing preparation step (S16), wherein the first bonding region (12a, 12a', 12a") is placed in the semi-cured state by heating;
a contact pressure step (S32), wherein the first bonding region (12a, 12a', 12a"), having assumed the semi-cured state in the first semi-curing step (S18), is pressed in contact with a second bonding region (14a, 14a', 14a") of the second composite material (14, 14', 14'', 14''') to be bonded with the first composite material (12, 12', 12'', 12"'), the second bonding material assuming the softened state or the semi-cured state; and
a heat-bonding step (S34), wherein the first and second bonding regions (12a, 12a', 12a", 14a, 14a', 14a"), having been brought into contact and pressed in the contact pressure step (S32), are placed in the cured state by heating.

2. The method for bonding composite materials together according to claim 1, wherein
in the first curing preparation step (S12), the first bonding region (12a, 12a', 12a'') is covered with an electromagnetic wave shield, and
in the first curing step (S14), an electric field or a magnetic field is applied to the first non-bonding region (12b, 12b')exposed from the electromagnetic wave shield (22, 32) .

3. The method for bonding composite materials together according to claim 1 or 2, wherein
in the first curing preparation step (S12), a metal nanocoil is applied or a metal nanocoil sheet (122) to which a metal nanocoil is applied is attached to the first non-bonding region (12b, 12b'), and
in the first curing step (S14), an electric field or a magnetic field is applied to the first non-bonding region (12b, 12b') to which the metal nanocoil is applied or the metal nanocoil sheet (122) is attached.

4. The method for bonding composite materials together according to claim 2 or 3, wherein in the first curing step (S14), the electric field is applied in a direction along the first non-bonding region (12b, 12b'), or the magnetic field is applied in a direction orthogonal to a direction along the first non-bonding region (12b, 12b').

5. The method for bonding composite materials together according to any one of claims 2 to 4, wherein in the first curing preparation step (S12), some or all of the reinforced fibers are cut at the border between the first bonding region (12a, 12a', 12a") and the first non-bonding region (12b, 12b').

6. The method for bonding composite materials together according to any one of claims 1 to 5, wherein
in the first semi-curing preparation step (S16), the first non-bonding region (12b, 12b') is covered with an electromagnetic wave shield (32), and
in the first semi-curing step (S18), an electric field or a magnetic field is applied to the first bonding region (12a, 12a', 12a") exposed from the electromagnetic wave shield (32).

7. The method for bonding composite materials together according to any one of claims 1 to 6, wherein
in the first semi-curing preparation step (S16), a metal nanocoil is applied or a metal nanocoil sheet (122) to which a metal nanocoil is applied is attached to the first bonding region (12a, 12a', 12a"), and
in the first semi-curing step (S18), an electric field or a magnetic field is applied to the first bonding region (12a, 12a', 12a") to which the metal nanocoil is applied or the metal nanocoil sheet (132) is attached.

8. The method for bonding composite materials together according to claim 6 or 7, wherein in the first semi-curing step (S18), the electric field is applied in a direction along the first bonding region (12a, 12a', 12a"), or the magnetic field is applied in a direction orthogonal to a direction along the first bonding region (12a, 12a', 12a").

9. The method for bonding composite materials together according to any one of claims 6 to 8, wherein in the first semi-curing preparation step (S16), some or all of the reinforced fibers are cut at the border between the first bonding region (12a, 12a', 12a") and the first non-bonding region (12b, 12b').

10. The method for bonding composite materials together according to any one of claims 1 to 9, wherein
in the contact pressure step (S32), the first non-bonding region (12b, 12b') and a second non-bonding region (14b, 14b'), which is a region other than the second bonding region (14a, 14a', 14a"), are covered with an electromagnetic wave shield (63), and
in the heat bonding step (S34), an electric field or a magnetic field is applied to the first and second bonding regions (12a, 12a', 12a", 14a, 14a', 14a") exposed from the electromagnetic wave shield (63).

11. The method for bonding composite materials together according to any one of claims 1 to 10, wherein
in the contact pressure step (S32), a metal nanocoil is applied or a metal nanocoil sheet (163) to which a metal nanocoil is applied is attached to the first and second bonding regions (12a, 12a', 12a', 14a, 14a', 14a") placed in contact with each other and pressed, and
in the heat bonding step (S34), an electric field or a magnetic field is applied to the first and second bonding regions (12a, 12a', 12a', 14a, 14a', 14a") to which the metal nanocoil is applied or the metal nanocoil sheet (163) is attached.

12. The method for bonding composite materials together according to claim 10 or 11, wherein in the heat bonding step (S34), the electric field is applied in a direction along the first and second bonding regions (12a, 12a', 12a", 14a, 14a', 14a"), or the magnetic field is applied in a direction orthogonal to a direction along the first and second bonding regions (12a, 12a', 12a', 14a, 14a', 14a").

13. The method for bonding composite materials together according to any one of claims 10 to 12, wherein in the contact pressure step (S32), some or all of the reinforced fibers are cut at the border between the first bonding region (12a, 12a', 12a") and the first non-bonding region (12b, 12b') and the border between the second bonding region (14a, 14a', 14a") and the second non-bonding region (14b, 14b'), which is a region other than the second bonding region (14a, 14a', 14a'').

14. The method for bonding composite materials together according to any one of claims 1 to 13, the method comprising:
a second curing preparation step (S22), wherein the second bonding region (14a, 14a', 14a") is prepared to be maintained in the softened state; and
a second curing step (S24) performed after the second curing preparation step (S22), wherein the second non-bonding region (14b, 14b'), which is a region other than the second bonding region (14a, 14a', 14a''), is placed in the cured state by heating,
wherein both steps (S22, S24) precede the contact pressure step (S32).

15. The method for bonding composite materials together according to claim 14, wherein
in the second curing preparation step (S22), the second bonding region (14a, 14a', 14a'') is covered with an electromagnetic wave shield (42), and
in the second curing step (S24), an electric field or a magnetic field is applied to the second non-bonding region (14b, 14b') exposed from the electromagnetic wave shield (42) .

16. The method for bonding composite materials together according to claim 14 or 15, wherein
in the second curing preparation step (S22), a metal nanocoil is applied or a metal nanocoil sheet (142) to which a metal nanocoil is applied is attached to the second non-bonding region (14b, 14b'), and
in the second curing step (S24), an electric field or a magnetic field is applied to the second non-bonding region (14b, 14b') to which the metal nanocoil is applied or the metal nanocoil sheet (142) is attached.

17. The method for bonding composite materials together according to claim 15 or 16, wherein in the second curing step (S24), the electric field is applied in a direction along the second non-bonding region (14b, 14b'), or the magnetic field is applied in a direction orthogonal to a direction along the second non-bonding region (14b, 14b').

18. The method for bonding composite materials together according to any one of claims 15 to 17, wherein in the second curing preparation step (S22), some or all of the reinforced fibers are cut at the border between the second bonding region (14a, 14a', 14a") and the second non-bonding region (14b, 14b').

19. The method for bonding composite materials together according to any one of claims 14 to 18, the method comprising:
a second semi-curing preparation step (S26) performed after the second curing step (S24), wherein the second bonding region (14a, 14a', 14a'') is placed in a heatable state; and
a second semi-curing step (S28) performed after the second semi-curing preparation step (S26), wherein the second bonding region (14a, 14a', 14a") is placed in the semi-cured state by heating,
wherein both steps (S26, S28) precede the contact pressure step (S32).

20. The method for bonding composite materials together according to claim 19, wherein
in the second semi-curing preparation step (S26), the second bonding region (14a, 14a', 14a") is covered with an electromagnetic wave shield (52), and
in the second semi-curing step (S28), an electric field or a magnetic field is applied to the second bonding region (14a, 14a', 14a") exposed from the electromagnetic wave shield (52).

21. The method for bonding composite materials together according to claim 19 or 20, wherein
in the second semi-curing preparation step (S26), a metal nanocoil is applied or a metal nanocoil sheet (152) to which a metal nanocoil is applied is attached to the second bonding region (14a, 14a', 14a"), and
in the second semi-curing step (S28), an electric field or a magnetic field is applied to the second bonding region (14a, 14a', 14a") to which the metal nanocoil is applied or the metal nanocoil sheet (152) is attached.

22. The method for bonding composite materials together according to claim 20 or 21, wherein in the second semi-curing step (S26), the electric field is applied in a direction along the second bonding region (14a, 14a', 14a"), or the magnetic field is applied in a direction orthogonal to a direction along the second bonding region (14a, 14a', 14a").

23. The method for bonding composite materials together according to any one of claims 20 to 22, wherein in the second semi-curing preparation step (S26), some or all of the reinforced fibers are cut at the border between the second bonding region (14a, 14a', 14a") and the second non-bonding region (14b, 14b').

## Patentansprüche

1. Verfahren zum Verbinden von Verbundmaterialien miteinander, wobei ein erstes Verbundmaterial (12, 12', 12'', 12'') und ein zweites Verbundmaterial (14, 14', 14'', 14'''), das durch Imprägnieren von verstärkten Fasern mit wärmehärtbaren Harzen hergestellt wurde, durch Erhitzen miteinander verbunden werden, um das erste und das zweite Verbundmaterial (12, 12', 12'', 12''', 14, 14', 14'', 14''') wärmehärtend zu machen, und
wobei mindestens vorgeschriebene Bereiche des ersten und zweiten Verbundmaterials (12, 12', 12'', 12''', 14, 14', 14", 14''', 14'''') einen erweichten Zustand, nämlich einen Zustand vor der Wärmehärtung der wärmehärtbaren Harze, einen ausgehärteten Zustand, nämlich einen Zustand nach der Wärmehärtung der wärmehärtbaren Harze, oder einen halb ausgehärteten Zustand, nämlich einen Zustand zwischen dem erweichten und dem ausgehärteten Zustand, einnehmen;
wobei das Verfahren umfasst:
einen ersten Härtungsvorbereitungsschritt (S12), wobei ein erster Bindungsbereich des ersten Verbundmaterials (12, 12', 12'', 12'''), der mit dem zweiten Verbundmaterial (14, 14', 14'', 14"') verbunden werden soll, vorbereitet wird, um in einem erweichten Zustand gehalten zu werden;
einen ersten Härtungsschritt (S14), der nach dem ersten Härtungsvorbereitungsschritt (S12) durchgeführt wird, wobei ein erster nicht bindender Bereich (12b, 12b'), der ein anderer Bereich als der erste Bindungsbereich (12a, 12a', 12a'') ist, durch Erwärmen in den gehärteten Zustand gebracht wird;
einen ersten Halbhärtungsvorbereitungsschritt (S16), wobei der erste Bindungsbereich (12a, 12a', 12a'') in einen heizbaren Zustand gebracht wird;
einen ersten Halbhärtungsschritt (S18), der nach dem ersten Halbhärtungsvorbereitungsschritt (S16) durchgeführt wird, wobei der erste Bindungsbereich (12a, 12a', 12a'') durch Erwärmen in den halb gehärteten Zustand gebracht wird;
einen Kontaktdruckschritt (S32), wobei der erste Bindungsbereich (12a, 12a', 12a''), der im ersten Halbhärtungsschritt (S18) den halb gehärteten Zustand angenommen hat, in Kontakt mit einem zweiten Bindungsbereich (14a, 14a', 14a'') des zweiten Verbundmaterials (14, 14', 14'', 14''') gedrückt wird, das mit dem ersten Verbundmaterial (12, 12', 12'', 12''') verbunden werden soll, wobei das zweite Verbindungsmaterial den erweichten Zustand oder den halb gehärteten Zustand annimmt; und
einen Wärmebonding-Schritt (S34), wobei die ersten und zweiten Bindungsbereiche (12a, 12a', 12a', 14a, 14a', 14a''), die in dem Kontaktdruckschritt (S32) in Kontakt gebracht und gepresst wurden, durch Erwärmen in den gehärteten Zustand gebracht werden.

2. Verfahren zum Verbinden von Verbundmaterialien miteinander nach Anspruch 1, wobei
in dem ersten Härtungsvorbereitungsschritt (S12) wird der erste Bindungsbereich (12a, 12a', 12a'') mit einer elektromagnetischen Wellenabschirmung bedeckt wird, und
in dem ersten Härtungsschritt (S14) ein elektrisches Feld oder ein Magnetfeld an den ersten Nicht-Bindungsbereich (12b, 12b') angelegt wird, der von der elektromagnetischen Wellenabschirmung (22, 32) freigelegt wird.

3. Verfahren zum Verbinden von Verbundmaterialien miteinander nach Anspruch 1 oder 2, wobei
in dem ersten Härtungsvorbereitungsschritt (S12) eine Metall-Nanospule oder ein Metall-Nanospulen-Sheet (122), auf das eine Metall-Nanospule aufgetragen ist, an dem ersten Nicht-Bindungsbereich (12b, 12b') befestigt, aufgetragen wird, und
in dem ersten Härtungsschritt (S14) ein elektrisches Feld oder ein magnetisches Feld an den ersten Nicht-Bindungsbereich (12b, 12b') angelegt wird, auf den die Metall-Nanospule aufgebracht oder das Metall-Nanospulen-Sheet (122) befestigt ist.

4. Verfahren zum Verbinden von Verbundmaterialien miteinander nach Ansprüchen 2 oder 3, wobei in dem ersten Härtungsschritt (S14) das elektrische Feld in einer Richtung entlang des ersten Nicht-Bindungsbereichs (12b, 12b') angelegt wird oder das magnetische Feld in einer Richtung senkrecht zu einer Richtung entlang des ersten Nicht-Bindungsbereichs (12b, 12b') angelegt wird.

5. Verfahren zum Verbinden von Verbundmaterialien miteinander nach einem der Ansprüche 2 bis 4, wobei in dem ersten Härtungsvorbereitungsschritt (S12) einige oder alle der verstärkten Fasern an der Grenze zwischen dem ersten Bindungsbereich (12a, 12a', 12a'') und dem ersten Nicht-Bindungsbereichs (12b, 12b') geschnitten werden.

6. Verfahren zum Verbinden von Verbundmaterialien miteinander nach einem der Ansprüche 1 bis 5, wobei
in dem ersten Halbhärtungsvorbereitungsschritt (S16) der erste Nicht-Bindungsbereich (12b, 12b') mit einer elektromagnetischen Wellenabschirmung (32) abgedeckt wird, und
in dem ersten Halbhärtungsschritt (S18) ein elektrisches Feld oder ein Magnetfeld an den ersten Verbindungsbereich (12a, 12a', 12a'') angelegt wird, der von der elektromagnetischen Wellenabschirmung (32) freigelegt ist.

7. Verfahren zum Verbinden von Verbundmaterialien miteinander nach einem der Ansprüche 1 bis 6, wobei
in dem Halbhärtungsvorbereitungsschritt (S16) eine Metall-Nanospule aufgetragen oder ein Metall-Nanospulen Sheet (122), auf das eine Metall-Nanospule aufgetragen ist, mit dem ersten Bindungsbereich (12a, 12a', 12a'') verbunden wird, und
in dem ersten Halbhärtungsschritt (S18) ein elektrisches Feld oder ein Magnetfeld an den ersten Bindungsbereich (12a, 12a', 12a'') angelegt wird, auf den die Metallnanospule aufgebracht oder das Metall-Nanospulen-Sheet (132) befestigt ist.

8. Verfahren zum Verbinden von Verbundmaterialien miteinander nach Ansprüchen 6 oder 7, wobei in dem ersten Halbhärtungsschritt (S18) das elektrische Feld in einer Richtung entlang des ersten Bindungsbereichs (12a, 12a', 12a'') angelegt oder das magnetische Feld in einer Richtung senkrecht zu einer Richtung entlang des ersten Bindungsbereichs (12a, 12a', 12a'') angelegt wird.

9. Verfahren zum Verbinden von Verbundmaterialien miteinander nach einem der Ansprüche 6 bis 8, wobei in dem ersten Halbhärtungsvorbereitungsschritt (S16) einige oder alle der verstärkten Fasern an der Grenze zwischen dem ersten Bindungsbereich (12a, 12a', 12a'') und dem ersten Nicht-Bindungsbereich (12b, 12b') geschnitten werden.

10. Verfahren zum Verbinden von Verbundmaterialien miteinander nach einem der Ansprüche 1 bis 9, wobei
in dem Kontaktdruckschritt (S32) der erste Nicht-Bindungsbereich (12b, 12b') und ein zweiter Nicht-Bindungsbereich (14b, 14b'), der ein anderer Bereich als der zweite Bindungsbereich (14a, 14a', 14a'') ist, mit einer elektromagnetischen Wellenabschirmung (63) abgedeckt werden, und
in dem Wärmebonding-Schritt (S34) ein elektrisches Feld oder ein magnetisches Feld an die ersten und zweiten Bondbereiche (12a, 12a', 12a', 14a, 14a', 14a'') angelegt wird, die von der elektromagnetischen Wellenabschirmung (63) exponiert sind.

11. Verfahren zum Verbinden von Verbundmaterialien miteinander nach einem der Ansprüche 1 bis 10, wobei
in dem Kontaktdruckschritt (S32) eine Metall-Nanospule aufgebracht oder ein Metall-Nanospulen-Sheet (163), auf das eine Metall-Nanospule aufgebracht ist, an den ersten und zweiten Bindungsbereichen (12a, 12a', 12a'', 14a, 14a', 14a'') befestigt wird, die miteinander in Kontakt gebracht und gepresst werden, und
in dem Wärmebonding-Schritt (S34) ein elektrisches Feld oder ein magnetisches Feld an den ersten und zweiten Bindungsbereich (12a, 12a', 12a'', 14a, 14a', 14a'') angelegt wird, an die die Metall-Nanospule angelegt oder das Metall-Nanospulen-Sheet (163) befestigt ist.

12. Verfahren zum Verbinden von Verbundmaterialien miteinander nach Ansprüchen 10 oder 11, wobei in dem Wärmebonding-Schritt (S34) das elektrische Feld in einer Richtung entlang der ersten und zweiten Bindungsbereiche (12a, 12a', 12a'', 14a, 14a', 14a', 14a'') angelegt wird, oder das magnetische Feld in einer Richtung senkrecht zu einer Richtung entlang der ersten und zweiten Bindungsbereiche (12a, 12a', 12a'', 14a, 14a', 14a'') angelegt wird.

13. Verfahren zum Verbinden von Verbundmaterialien miteinander nach einem der Ansprüche 10 bis 12, wobei in dem Kontaktdruckschritt (S32) einige oder alle der verstärkten Fasern an der Grenze zwischen dem ersten Bindungsbereich (12a, 12a', 12a'') und dem ersten Nicht-Bindungsbereich (12b, 12b'), und an der Grenze zwischen dem ersten Nicht-Bindungsbereich e zwischen dem zweiten Bindungsbereich (14a, 14a', 14a'') und dem zweiten Nicht-Bindungsbereich (14b, 14b'), der ein andere Bereich als die zweite Bindungsbereich (14a, 14a', 14a'') ist, geschnitten werden.

14. Verfahren zum Verbinden von Verbundmaterialien miteinander nach einem der Ansprüche 1 bis 13, wobei das Verfahren umfasst:
einen zweiten Härtungsvorbereitungsschritt (S22), wobei der zweite Bindungsbereich (14a, 14a', 14a'') vorbereitet wird, um in dem erweichten Zustand gehalten zu werden; und
einen zweiten Härtungsschritt (S24), der nach dem zweiten Härtungsvorbereitungsschritt (S22) durchgeführt wird, wobei der zweite Nicht-Bindungsbereich (14b, 14b'), der ein anderer Bereich als der zweite Bindungsbereich (14a, 14a', 14a'') ist, durch Erwärmen in den gehärteten Zustand gebracht wird,
wobei beiden Schritte (S22, S24) dem Kontaktdruckschritt (S32) vorausgehen.

15. Verfahren zum Verbinden von Verbundmaterialien miteinander nach Anspruch 14, wobei
in der zweiten Härtungsvorbereitungsstufe (S22) der zweite Bindungsbereich (14a, 14a', 14a'') mit einer elektromagnetischen Wellenabschirmung (42) abgedeckt wird, und
in dem zweiten Härtungsschritt (S24) ein elektrisches Feld oder ein magnetisches Feld an den zweiten nichtbindenden Bereich (14b, 14b') angelegt wird, der von der elektromagnetischen Wellenabschirmung (42) freiliegt.

16. Verfahren zum Verbinden von Verbundmaterialien miteinander nach Ansprüchen 14 oder 15, wobei
in dem zweiten Härtungsvorbereitungsschritt (S22) eine Metall-Nanospule aufgetragen oder ein Metall-Nanospulen-Sheet (142), auf das eine Metall-Nanospule aufgetragen ist, an den zweiten Nicht-Bindungsbereich (14b, 14b') befestigt wird, und
in dem zweiten Härtungsschritt (S24) ein elektrisches Feld oder ein magnetisches Feld an den zweiten Nicht-Bindungsbereich (14b, 14b') angelegt wird, auf den die Metall-Nanospule aufgebracht oder das Metall-Nanospulen-Sheet (142) befestigt wird.

17. Verfahren zum Verbinden von Verbundmaterialien miteinander nach Ansprüchen 15 oder 16, wobei in dem zweiten Härtungsschritt (S24) das elektrische Feld in einer Richtung entlang des zweiten Nicht-Bindungsbereichs (14b, 14b') angelegt wird, oder das magnetische Feld in einer Richtung senkrecht zu einer Richtung entlang des zweiten Nicht-Bindungsbereichs (14b, 14b') angelegt wird.

18. Verfahren zum Verbinden von Verbundmaterialien miteinander nach einem der Ansprüche 15 bis 17, wobei in dem zweiten Härtungsvorbereitungsschritt (S22) einige oder alle verstärkten Fasern an der Grenze zwischen dem zweiten Bindungsbereich (14a, 14a', 14a'') und dem zweiten Nicht-Bindungsbereich (14b, 14b') geschnitten werden.

19. Verfahren zum Verbinden von Verbundmaterialien miteinander nach einem der Ansprüche 14 bis 18, umfassend:
einen zweiten Halbhärtungsvorbereitungsschritt (S26), der nach dem zweiten Härtungsschritt (S24) durchgeführt wird, wobei der zweite Bindungsbereich (14a, 14a', 14a'') in einen heizbaren Zustand gebracht wird; und
einen zweiten Halbhärtungsschritt (S28), der nach dem zweiten Halbhärtungsvorbereitungsschritt (S26) durchgeführt wird, wobei der zweite Bindungsbereich (14a, 14a', 14a'') durch Erwärmen in den halbhärtenden Zustand gebracht wird,
wobei beiden Schritte (S26, S28) dem Kontaktdruckschritt (S32) vorausgehen.

20. Verfahren zum Verbinden von Verbundmaterialien miteinander nach Anspruch 19, wobei
in dem zweiten Halbhärtungsvorbereitungsschritt (S26) der zweite Bindungsbereich (14a, 14a', 14a'') mit einer elektromagnetischen Wellenabschirmung (52) abgedeckt wird, und
in dem zweiten Halbhärtungsschritt (S28) ein elektrisches Feld oder ein Magnetfeld an den zweiten Bindungsbereich (14a, 14a', 14a'') angelegt wird, der von der elektromagnetischen Wellenabschirmung (52) freigelegt ist.

21. Verfahren zum Verbinden von Verbundmaterialien miteinander nach Ansprüchen 19 oder 20, wobei
in dem zweiten Halbhärtungsvorbereitungsschritt (S26) eine Metall-Nanospule aufgetragen oder ein Metall-Nanospulen-Sheet (152), auf das eine Metall-Nanospule aufgetragen ist, mit dem zweiten Bindungsbereich (14a, 14a', 14a'') verbunden wird, und
in dem zweiten Halbhärtungsschritt (S28) ein elektrisches Feld oder ein Magnetfeld an den zweiten Bindungsbereich (14a, 14a', 14a'') angelegt wird, auf den die Metall-Nanospule aufgebracht oder das Metall-Nanospulen-Sheet (152) befestigt wird.

22. Verfahren zum Verbinden von Verbundmaterialien miteinander nach Ansprüchen 20 oder 21, wobei in dem zweiten Halbhärtungsvorbereitungsschritt (S26) das elektrische Feld in einer Richtung entlang des zweiten Bindungsbereichs (14a, 14a', 14a'') angelegt wird oder das magnetische Feld in einer Richtung senkrecht zu einer Richtung entlang des zweiten Bindungsbereichs (14a, 14a', 14a'') angelegt wird.

23. Verfahren zum Verbinden von Verbundmaterialien miteinander nach einem der Ansprüche 20 bis 22, wobei in dem zweiten Halbhärtungsvorbereitungsschritt (S26) einige oder alle der verstärkten Fasern an der Grenze zwischen dem zweiten Bindungsbereich (14a, 14a', 14a'') und dem zweiten Nicht-Bindungsbereich (14b, 14b') geschnitten werden.

## Revendications

1. Procédé pour lier des matériaux composites ensemble, dans lequel un premier matériau composite (12, 12', 12", 12"') et un second matériau composite (14', 14', 14", 14"') préparés en imprégnant des fibres renforcées avec des résines thermodurcissables sont liés ensemble par chauffage pour durcir à chaud les premier et second matériaux composites (12, 12', 12", 12'", 14, 14', 14", 14"') et
au moins des régions déterminées des premier et second matériaux composites (12, 12', 12", 12"', 14, 14', 14", 14"') prennent un état ramolli, qui est un état avant le durcissement à chaud des résines thermodurcissables, un état durci, qui est un état après le durcissement à chaud des résines thermodurcissables, ou un état semi-durci, qui est un état entre l'état ramolli et l'état durci ;
le procédé comprenant :
une première étape de préparation au durcissement (S12), dans laquelle une première région de liaison du premier matériau composite (12, 12', 12", 12"') devant être liée au second matériau composite (14, 14', 14", 14'") est préparée pour être maintenue dans un état ramolli ;
une première étape de durcissement (S14) mise en œuvre après la première étape de préparation au durcissement (S12), dans laquelle une première région de non-liaison (12b, 12b'), qui est une région autre que la première région de liaison (12a, 12a', 12a"), est mise à l'état durci par chauffage ;
une première étape de préparation au semi-durcissement (S16), dans laquelle la première région de liaison (12a, 12a', 12a") est mise dans un état chauffable ;
une première étape de semi-durcissement (S18) mise en œuvre après la première étape de préparation au semi-durcissement (S16), dans laquelle la première région de liaison (12a, 12a', 12a") est mise à l'état semi-durci par chauffage ;
une étape de pression de contact (S32), dans laquelle la première région de liaison (12a, 12a', 12a"), ayant pris l'état semi-durci dans la première étape de semi-durcissement (S18), est pressée en contact avec une seconde région de liaison (14a, 14a', 14a") du second matériau composite (14, 14', 14", 14"') pour la lier avec le premier matériau composite (12, 12', 12", 12"'), le second matériau de liaison prenant l'état ramolli ou l'état semi-durci ; et
une étape de liaison à chaud (S34), dans laquelle les première et seconde régions de liaison (12a, 12a', 12a", 14a, 14a', 14a"), ayant été mises en contact et pressées dans l'étape de pression de contact (S32), sont mises à l'état durci par chauffage.

2. Procédé pour lier des matériaux composites ensemble selon la revendication 1, dans lequel
lors de la première étape de préparation au durcissement (S12), la première région de liaison (12a, 12a', 12a") est recouverte avec un blindage contre les ondes électromagnétiques, et
lors de la première étape de durcissement (S14), un champ électrique ou un champ magnétique est appliqué à la première région de non-liaison (12b, 12b') exposée en dehors du blindage contre les ondes électromagnétiques (22, 32).

3. Procédé pour lier des matériaux composites ensemble selon la revendication 1 ou 2, dans lequel
lors de la première étape de préparation au durcissement (S12), une nanobobine métallique est appliquée ou une feuille à nanobobine métallique (122) sur laquelle une nanobobine métallique est appliquée est attachée à la première région de non-liaison (12b, 12b'), et
lors de la première étape de durcissement (S14), un champ électrique ou un champ magnétique est appliqué à la première région de non-liaison (12b, 12b') sur laquelle la nanobobine métallique est appliquée ou la feuille à nanobobine métallique (122) est attachée.

4. Procédé pour lier des matériaux composites ensemble selon la revendication 2 ou 3, dans lequel, lors de la première étape de durcissement (S14), le champ électrique est appliqué dans une direction le long de la première région de non-liaison (12b, 12b'), ou le champ magnétique est appliqué dans une direction orthogonale à une direction le long de la première région de non-liaison (12b, 12b').

5. Procédé pour lier des matériaux composites ensemble selon l'une quelconque des revendications 2 à 4, dans lequel, lors de la première étape de préparation au durcissement (S12), certaines ou la totalité des fibres renforcées sont coupées à la frontière entre la première région de liaison (12a, 12a', 12a") et la première région de non-liaison (12b, 12b').

6. Procédé pour lier des matériaux composites ensemble selon l'une quelconque des revendications 1 à 5, dans lequel
lors de la première étape de préparation au semi-durcissement (S16), la première région de non-liaison (12b, 12b') est recouverte avec un blindage contre les ondes électromagnétiques (32), et
lors de la première étape de semi-durcissement (S18), un champ électrique ou un champ magnétique est appliqué à la première région de liaison (12a, 12a', 12a") exposée en dehors du blindage contre les ondes électromagnétiques (32).

7. Procédé pour lier des matériaux composites ensemble selon l'une quelconque des revendications 1 à 6, dans lequel
lors de la première étape de préparation au semi-durcissement (S16), une nanobobine métallique est appliquée, ou une feuille à nanobobine métallique (122) sur laquelle une nanobobine métallique est appliquée est attachée à la première région de liaison (12a, 12a', 12a"), et
lors de la première étape de semi-durcissement (S18), un champ électrique ou un champ magnétique est appliqué à la première région de liaison (12a, 12a', 12a") sur laquelle la nanobobine est appliquée ou la feuille à nanobobine métallique (132) est attachée.

8. Procédé pour lier des matériaux composites ensemble selon la revendication 6 ou 7, dans lequel, lors de la première étape de semi-durcissement (S18), le champ électrique est appliqué dans une direction le long de la première région de liaison (12a, 12a', 12a"), ou le champ magnétique est appliqué dans une direction orthogonale à une direction le long de la première région de liaison (12a, 12a', 12a").

9. Procédé pour lier des matériaux composites ensemble selon l'une quelconque des revendications 6 à 8, dans lequel, lors de la première étape de préparation au semi-durcissement (S16), certaines ou la totalité des fibres renforcées sont coupées à la frontière entre la première région de liaison (12a, 12a', 12a") et la première région de non-liaison (12b, 12b').

10. Procédé pour lier des matériaux composites ensemble selon l'une quelconque des revendications 1 à 9, dans lequel
lors de l'étape de pression de contact (S32), la première région de non-liaison (12b, 12b') et une seconde région de non-liaison (14b, 14b'), qui est une région autre que la seconde région de liaison (14a, 14a', 14a"), sont recouvertes avec un blindage contre les ondes électromagnétiques (63), et
lors de l'étape de liaison à chaud (S34), un champ électrique ou un champ magnétique est appliqué aux première et seconde régions de liaison (12a, 12a', 12a", 14a, 14a', 14a") exposées en dehors du blindage contre les ondes électromagnétiques (63).

11. Procédé pour lier des matériaux composites ensemble selon l'une quelconque des revendications 1 à 10, dans lequel
lors de l'étape de pression de contact (S32), une nanobobine métallique est appliquée ou une feuille de bobine métallique (163) sur laquelle une nanobobine métallique est appliquée est attachée aux première et seconde régions de liaison (12a, 12a', 12a", 14a, 14a', 14a") placées en contact entre elles et pressées, et
lors de l'étape de liaison à chaud (S34), un champ électrique ou un champ magnétique est appliqué aux première et seconde régions de liaison (12a, 12a', 12a", 14a, 14a', 14a") sur lesquelles la nanobobine métallique est appliquée ou la feuille à nanobobine métallique (163) est attachée.

12. Procédé pour lier des matériaux composites ensemble selon la revendication 10 ou 11, dans lequel, lors l'étape de liaison à chaud (S34), le champ électrique est appliqué dans une direction le long des première et seconde régions de liaison (12a, 12a', 12a", 14a, 14a', 14a"), ou le champ magnétique est appliqué dans une direction orthogonale à une direction le long des première et seconde régions de liaison (12a, 12a', 12a", 14a, 14a', 14a").

13. Procédé pour lier des matériaux composites ensemble selon l'une quelconque des revendications 10 à 12, dans lequel, lors de l'étape de pression de contact (S32), certaines ou la totalité des fibres renforcées sont coupées à la frontière entre la première région de liaison (12a, 12a', 12a") et la première région de non-liaison (12b, 12b') et à la frontière entre la seconde région de liaison (14a, 14a', 14a") et la seconde région de non-liaison (14b, 14b'), qui est une région autre que la seconde région de liaison (14a, 14a', 14a").

14. Procédé pour lier des matériaux composites ensemble selon l'une quelconque des revendications 1 à 13, le procédé comprenant :
une seconde étape de préparation au durcissement (S22), dans laquelle la seconde région de liaison (14a, 14a', 14a") est préparée pour être maintenue à l'état ramolli ; et
une seconde étape de durcissement (S24) mise en œuvre après la seconde étape de préparation au durcissement (S22), dans laquelle la seconde région de non-liaison (14b, 14b'), qui est une région autre que la seconde région de liaison (14a, 14a', 14a"), est mise à l'état durci par chauffage,
dans lequel les deux étapes (S22, S24) précèdent l'étape de pression de contact (S32).

15. Procédé pour lier des matériaux composites ensemble selon la revendication 14, dans lequel
lors de la seconde étape de préparation au durcissement (S22), la seconde région de liaison (14a, 14a', 14a") est recouverte avec un blindage contre les ondes électromagnétiques (42), et
lors de la seconde étape de durcissement (S24), un champ électrique ou un champ magnétique est appliqué à la seconde région de non-liaison (14b, 14b') exposée en dehors du blindage contre les ondes électromagnétiques (42).

16. Procédé pour lier des matériaux composites ensemble selon la revendication 14 ou 15, dans lequel
lors de la seconde étape de préparation au durcissement (S22), une nanobobine métallique est appliquée ou une feuille à nanobobine métallique (142) sur laquelle une nanobobine métallique est appliquée est attachée à la seconde région de non-liaison (14b, 14b'), et
lors de la seconde étape de durcissement (S24), un champ électrique ou un champ magnétique est appliqué à la seconde région de non-liaison (14b, 14b') sur laquelle la nanobobine métallique est appliquée ou la feuille à nanobobine métallique (142) est attachée.

17. Procédé pour lier des matériaux composites ensemble selon la revendication 15 ou 16, dans lequel, lors de la seconde étape de durcissement (S24), le champ électrique est appliqué dans une direction le long de la seconde région de non-liaison (14b, 14b'), ou le champ magnétique est appliqué dans une direction orthogonale à une direction le long de la seconde région de non-liaison (14b, 14b').

18. Procédé pour lier des matériaux composites ensemble selon l'une quelconque des revendications 15 à 17, dans lequel, lors de la seconde étape de préparation au durcissement (S22), certaines ou la totalité des fibres renforcées sont coupées à la frontière entre la seconde région de liaison (14a, 14a', 14a") et la seconde région de non-liaison (14b, 14b').

19. Procédé pour lier des matériaux composites ensemble selon l'une quelconque des revendications 14 à 18, le procédé comprenant :
une seconde étape de préparation au semi-durcissement (S26) mise en œuvre après la seconde étape de durcissement (S24), dans laquelle la seconde région de liaison (14a, 14a', 14a") est mise dans un état chauffable ; et
une seconde étape de semi-durcissement (S28) mise en œuvre après la seconde étape de préparation au semi-durcissement (S26), dans laquelle la seconde région de liaison (14a, 14a', 14a") est mise à l'état semi-durci par chauffage,
dans lequel les deux étapes (S26, S28) précèdent l'étape de pression de contact (S32).

20. Procédé pour lier des matériaux composites ensemble selon la revendication 19, dans lequel
lors de la seconde étape de préparation au semi-durcissement (S26), la seconde région de liaison (14a, 14a', 14a") est recouverte avec un blindage contre les ondes électromagnétiques (52), et
lors de la seconde étape de semi-durcissement (S28), un champ électrique ou un champ magnétique est appliqué à la seconde région de liaison (14a, 14a', 14a") exposée en dehors du blindage contre les ondes électromagnétiques (52).

21. Procédé pour lier des matériaux composites ensemble selon la revendication 19 ou 20, dans lequel
lors de la seconde étape de préparation au semi-durcissement (S26), une nanobobine métallique est appliquée, ou une feuille à nanobobine métallique (152) sur laquelle une nanobobine métallique est appliquée est attachée à la seconde région de liaison (14a, 14a', 14a"), et
lors de la seconde étape de semi-durcissement (S28), un champ électrique ou un champ magnétique est appliqué à la seconde région de liaison (14a, 14a', 14a") sur laquelle la nanobobine métallique est appliquée ou la feuille à nanobobine métallique (152) est attachée.

22. Procédé pour lier des matériaux composites ensemble selon la revendication 20 ou 21, dans lequel, lors de la seconde étape de semi-durcissement (S26), le champ électrique est appliqué dans une direction le long de la seconde région de liaison (14a, 14a', 14a"), ou le champ magnétique est appliqué dans une direction orthogonale à une direction le long de la seconde région de liaison (14a, 14a', 14a").

23. Procédé pour lier des matériaux composites ensemble selon l'une quelconque des revendications 20 à 22, dans lequel, lors de la seconde étape de préparation au semi-durcissement (S26), certaines ou la totalité des fibres renforcées sont coupées à la frontière entre la seconde région de liaison (14a, 14a', 14a") et la seconde région de non-liaison (14b, 14b').
